# FASCICULE DE BREVET EUROPEEN

(11) **EP 1 030 978 B1**
(45) Date de publication et mention de la délivrance du brevet: **10.11.2004**
(21) Numéro de dépôt: 99943028.3
(22) Date de dépôt: 23.09.1999
(51) Int. Cl.: F16D 13/75

(54) **MECANISME D'EMBRAYAGE MUNI D'UN DISPOSITIF A RATTRAPAGE D'USURE A VIS SANS FIN**
KUPPLUNGSMECHANISMUS MIT VERSCHLEISS-NACHSTELLVORRICHTUNG MIT SCHNECKENANTRIEB
CLUTCH MECHANISM PROVIDED WITH AN ENDLESS SCREW WEAR TAKE-UP DEVICE

(30) Priorité: 23.09.1998 FR 9811991; 30.07.1999 FR 9909974
(43) Date de publication de la demande: 30.08.2000
(73) Titulaire: VALEO EMBRAYAGES s.a.s., 80009 Amiens Cedex 1 (FR)
(72) Inventeur: BLARD, Michel, F-92130 Issy-les-Moulineaux (FR); DALBIEZ, André, F-95100 Argenteuil (FR); THIRION DE BRIEL, Jacques, F-92700 Colombes (FR)
(74) Mandataire: Lemaire, Marc
(86) Numéro de dépôt international: PCT/FR1999/002257
(87) Numéro de publication internationale: WO 2000/017535

(56) Documents cités:
- FR-A- 2 739 159
- FR-A- 2 753 503
- US-A- 5 706 924
- US-A- 5 887 689

## Description

La présente invention concerne les embrayages à friction, notamment pour véhicules automobiles, et se rapporte plus particulièrement à l'ensemble unitaire, que comporte un tel embrayage décrit par exemple dans les documents FR-A-2 242 892 et FR-A-2 420 690. Un tel ensemble unitaire est appelé mécanisme d'embrayage.

Classiquement, un embrayage à friction comporte un volant moteur, éventuellement en deux parties pour formation notamment d'un volant amortisseur de torsion ou d'un volant flexible. Le volant moteur comporte un plateau de réaction.

Le volant moteur est solidaire en rotation d'un premier arbre, tel qu'un arbre menant, à savoir le vilebrequin du moteur à combustion interne dans le cadre d'une application à un véhicule automobile.

Le plateau de réaction présente dorsalement une face de friction et est solidaire en rotation d'un plateau de pression pouvant se déplacer axialement par rapport au plateau de réaction.

Ce plateau de pression présente frontalement une face de friction en vis à vis de celle du plateau de réaction.

Les garnitures de friction d'un disque de friction sont intercalées entre les plateaux de pression et de réaction, plus précisément entre les faces de friction de ceux-ci formant pistes de frottement.

Ces garnitures sont solidaires d'un support le plus souvent déformable élastiquement axialement pour formation d'un disque de friction progressif permettant une assistance lors de l'opération de débrayage. Ce support, éventuellement dédoublé, est relié rigidement ou élastiquement à un moyeu solidaire en rotation d'un deuxième arbre, tel qu'un arbre mené, à savoir l'arbre d'entrée d'une transmission du mouvement, par exemple, une boîte de vitesses, dans le cadre d'une application à un véhicule automobile. En variante, le support est noyé dans une garniture de friction. Dans tous les cas, le disque de friction présente à sa périphérie externe deux faces de friction qui s'usent lors de la durée de vie de l'embrayage.

Lorsque la ou les garnitures de friction sont serrées entre les plateaux de pression et de réaction (embrayage engagé), le couple est transmis de l'arbre menant à l'arbre mené via le disque de friction. Lorsque les garnitures de friction ne sont pas serrées entre lesdits plateaux (embrayage désengagé), l'arbre mené n'est pas entraîné par l'arbre menant. Pour ce faire, des moyens embrayeurs à action axiale sont prévus et forment un équipage avec des moyens débrayeurs prévus pour contrecarrer à volonté l'action des moyens embrayeurs prenant appui sur un couvercle pour action sur le plateau de pression, plus précisément pour action sur des moyens d'appuis portés par le plateau de pression solidaire en rotation du couvercle tout en pouvant se déplacer axialement par rapport à celui-ci, par exemple à l'aide d'une liaison à languettes axialement élastiques ou à l'aide d'une liaison du type tenons - mortaises ; des pattes radiales - formant tenons - du plateau de pression étant engagées à coulissement axial dans des rainures - formant mortaises - du couvercle.

Ce couvercle présente à sa périphérie externe, des moyens de fixation pour sa fixation au plateau de réaction de manière détachable ou non détachable.

Les moyens embrayeurs comportent au moins une rondelle Belleville et les moyens débrayeurs des leviers de débrayage pour action sur les moyens embrayeurs. Le plus souvent ces moyens embrayeurs et débrayeurs, appartiennent à une même pièce axialement élastique appelée diaphragme. Ce diaphragme, de forme tronconique à l'état libre, comporte une partie périphérique en forme de rondelle Belleville, prolongée radialement, vers le centre par une partie centrale fragmentée en doigts radiaux par des fentes borgnes à fonds élargis pour formation d'orifices élargis à la périphérie interne de la rondelle Belleville constituant les moyens embrayeurs à action axiale, tandis que les doigts radiaux forment des leviers de débrayage et donc les moyens débrayeurs de l'embrayage.

Dans les documents FR-A-2 242 892 et FR-A-2 420 690, le couvercle constitue avec le plateau de pression, les languettes élastiques et le diaphragme, un ensemble unitaire appelé mécanisme d'embrayage, que l'on rapporte sur le plateau de réaction. Bien entendu, ce mécanisme d'embrayage peut constituer avec le disque de friction et le plateau de réaction, un module que l'on rapporte de manière unitaire sur le vilebrequin du moteur du véhicule ou sur un flasque solidaire du vilebrequin, le plateau de réaction se fixant alors sur le flasque avantageusement flexible.

Ce mécanisme est avantageusement équipé d'un dispositif de compensation, appelé dispositif de rattrapage de rattrapage d'usure, pour compenser l'usure de ou des garnitures de friction et des faces de friction des plateaux de pression et de réaction pour que le diaphragme ait une position sensiblement constante lorsque l'embrayage est engagé et ce, durant la durée de vie de l'embrayage à friction. Le diaphragme exerce ainsi une charge sensiblement constante sur le plateau de pression en position embrayage engagé. La course de la butée de débrayage, agissant sur l'extrémité interne des doigts du diaphragme, est de manière connue sensiblement constante lors de l'opération de débrayage.

Ce dispositif de rattrapage d'usure comporte des rampes et des contre-rampes intervenant entre le plateau de pression et les moyens d'appui du diaphragme ou entre le diaphragme et le couvercle.

Un déclencheur, sensible à l'état de l'usure de ou des garnitures de friction, permet de faire tourner les rampes en cas d'usure pour que le diaphragme occupe toujours la même position lorsque l'embrayage est engagé sous l'action des moyens embrayeurs (garnitures serrées).

Le déclencheur comporte dans une forme de réalisation, un système à roue à rochet et vis sans fin, appartenant à une cassette comme décrit dans le document FR-A-2 753 503, qui montre un mécanisme d'embrayage selon le préambule de la revendication 1.

Plus précisément, il est prévu un organe élastique avec une languette de commande coopérant avec les dents de la roue à rochet et un cliquet anti-retour.

En cas d'usure, la languette de commande est manoeuvrée par un actionneur, en l'occurrence un appendice du diaphragme, pour faire tourner la roue à rochet et comprimer un ressort de rattrapage admis ultérieurement à se détendre. Un cliquet anti-retour empêche la vis sans fin de tourner en sens inverse, notamment lorsque le ressort se détend. La vis sans fin vient en prise avec la denture solidaire d'un anneau doté de rampes pour coopérer avec des contre-rampes solidaires du plateau de pression.

Ainsi, en cas d'usure, on augmente l'épaisseur du plateau de pression, composée du plateau de pression proprement dit et de l'anneau à rampes, le dit anneau portant des bossages d'appui constituant les moyens d'appui pour les moyens embrayeurs.

L'anneau vient donc en prise directement avec la vis sans fin.

Une telle disposition donne satisfaction, néanmoins, la Demanderesse s'est demandée s'il n'est pas possible de supprimer le cliquet anti-retour pour simplifier l'organe élastique.

Suivant l'invention, un mécanisme d'embrayage du type sus indiqué est caractérisé en ce que la denture appartient à une pièce intermédiaire liée en rotation à l'anneau à rampes par l'intermédiaire de moyens de liaison en rotation autorisant un déplacement axial de l'anneau à rampes par rapport à la pièce intermédiaire.

Grâce à l'invention, on peut supprimer le cliquet anti-retour du fait que la denture est uniquement accouplée en rotation à l'anneau à rampes par la pièce intermédiaire et que la vis sans fin peut entraîner en rotation la denture mais pas l'inverse, la liaison étant dans une forme de réalisation irréversible. Du fait que la denture n'est pas liée axialement à l'anneau à rampes et n'est donc pas entraînée par celui-ci lors des opérations d'embrayage et de débrayage la liaison vis sans fin - denture peut être réversible. La pièce intermédiaire est globalement axialement fixe et consiste par exemple en une rondelle. Grâce à l'invention, la présence d'une roue à rochet et d'une languette de commande n'est plus obligatoire. En effet, l'appendice du diaphragme peut pénétrer dans un évidement d'un tambour comme décrit dans le document FR-A-2 424 442.

Dans une forme de réalisation, la liaison est du type à coopération de formes à jeu circonférentiel de montage et on utilise les languettes élastiques de liaison en rotation du plateau de pression avec le couvercle pour pincer une rondelle, constituant la pièce intermédiaire, entre deux languettes d'un même jeu de languettes. Pour ce faire, les languettes présentent des protubérances pour pincer la rondelle intermédiaire. Dans une forme de réalisation, les protubérances sont réalisées au niveau de l'extrémité de fixation des languettes au couvercle. La rondelle intermédiaire est ainsi axialement fixe et est dotée par exemple d'échancrures dans lesquelles pénètrent des pattes de l'anneau à rampes lié ainsi en rotation, avec mobilité axiale, à la rondelle intermédiaire par coopération de formes.

Bien entendu, on peut inverser les structures, la rondelle présentant des pattes radiales pénétrant dans des échancrures axiales de l'anneau à rampes. En variante, la pièce intermédiaire est accouplée élastiquement en rotation à l'anneau à rampes, par exemple, à l'aide d'au moins un ressort à boudin remplaçant le ressort de rattrapage accolé à la vis sans fin.

En variante, la pièce intermédiaire à denture est liée en rotation à l'anneau à rampes par des secondes languettes élastiquement déformables axialement du type de celles, dites premières languettes, intervenant entre le plateau de pression et le couvercle. On supprime ainsi les frottements entre l'anneau à rampes et la pièce intermédiaire, les secondes languettes, dans une forme de réalisation d'orientation tangentielle, étant attelées à l'une de leurs extrémités à l'anneau à rampes et à leur autre extrémité à la pièce intermédiaire portant la denture.

Grâce aux secondes languettes, on peut réduire les pertes de matière, la pièce intermédiaire et l'anneau à rampes pouvant être issues d'un même flanc métallique par découpe, la pièce intermédiaire entourant l'anneau à rampes.

On notera que les secondes languettes élastiques axialement, permettent dans tous les cas la formation d'un sous-ensemble pièce intermédiaire - anneau à rampes, manipulable et transportable. Ceci facilite l'assemblage final.

En outre, ces secondes languettes sont montées avantageusement avec précontrainte et exercent une action de rappel de la pièce intermédiaire en direction d'au moins une butée portée par le couvercle du fait que l'anneau à rampes est, par l'intermédiaire de ses moyens d'appui, en contact avec le diaphragme, plus précisément avec la périphérie externe de celui-ci. Ainsi du fait de la précontrainte des secondes languettes le sous ensemble anneau à rampes - secondes languettes - pièce intermédiaire a une épaisseur à l'état libre supérieure à celle qu'il a lorsqu'il est monté dans l'embrayage - embrayage engagé - entre la butée et le diaphragme. La précontrainte est avantageusement choisie pour que le sous ensemble précité soit toujours en contact avec le diaphragme et la butée lors du désengagement de l'embrayage. Les secondes languettes sont cambrées pour dans une forme de réalisation réaliser la précontrainte. Elles peuvent avoir une forme courbe. Cette butée peut être formée à la faveur de protubérances appartenant aux premières languettes. La butée peut être fractionnée ou continue. En variante, la butée est formée à la faveur de pièces rigides servant à pincer les premières languettes entre elles-mêmes et une plage d'un rebord radial que présente le couvercle à sa périphérie externe. Ainsi, on protège les premières languettes et on profite de celles-ci pour bloquer en rotation par coopération de formes la ou les butées.

En variante, la butée est formée à la faveur de masses d'équilibrage du mécanisme d'embrayage rendues nécessaires par la présence d'une cassette comportant la vis sans fin portée par le couvercle.

Cette cassette est montée dans un logement que présente le couvercle à cet effet. Le couvercle présente en réalité plus d'un logement. On profite des logements vides pour monter des masses d'équilibrage servant de butée pour bloquer axialement dans un sens la pièce intermédiaire qui, ainsi, n'a pas besoin d'être pincée car elle est immobilisée axialement dans l'autre sens par l'anneau à rampes en contact avec le diaphragme sous l'action de rappel exercée dans les secondes languettes de liaison en rotation avec l'anneau à rampes.

Ces secondes languettes peuvent être des languettes du type standard, c'est à dire du type des premières languettes. Grâce à ces languettes, on peut centrer la pièce intermédiaire par rapport à une jupe du couvercle en sorte que le plateau de pression n'a pas besoin d'être usiné pour centrer l'anneau à rampes et que l'anneau à rampes est simplifié car il n'est plus nécessaire de prévoir sur celui-ci un rebord de centrage.

La présence de la pièce intermédiaire permet d'implanter au moins un ressort de rattrapage entre la pièce intermédiaire et l'anneau à rampes ce qui simplifie la cassette portant la vis sans fin.

La pièce intermédiaire peut ne pas être en forme d'anneau continu notamment lorsqu'elle est reliée par des languettes à l'anneau à rampes.

Ces secondes languettes peuvent avoir une autre forme, par exemple une forme d'accordéon. Les secondes languettes peuvent avoir également une action circonférentielle et constituer ainsi un ressort de rattrapage. Pour ce faire, elles ont avantageusement une forme d'accordéon, ce qui permet de supprimer le ressort de rattrapage au niveau de la cassette, la languette étant montée avec précontrainte entre l'anneau à rampes et la pièce intermédiaire.

En variante les secondes languettes au lieu d'être cambrées sont plates à l'origine et se sont les premières languettes, dont la force de rappel est alors accrue, qui sollicitent la pièce intermédiaire en direction de l'anneau à rampes.

Des crochets ou des cavaliers amovibles, par exemple en forme de clips, interviennent, dans une forme de réalisation, entre la pièce intermédiaire et l'anneau à rampes afin de protéger les secondes languettes avant montage du sous-ensemble précité ainsi créé sur le couvercle. En variante on peut remplacer les crochets par des vis, des boulons, etc. que l'on retire en final de la même manière que les crochets. Dans tous les cas la pièce intermédiaire est plaquée contre une butée axiale portée par le couvercle et prévue pour maintenir la pièce intermédiaire dans le sens axial allant du couvercle au plateau de pression. Dans une forme de réalisation le ressort de rattrapage est monté sous précontrainte en sorte que le rattrapage se fait principalement lors du réembrayage et que les usures et les mouvements relatifs entre la denture et la vis sont réduits.

D'autres avantages apparaîtront à la lumière de la description en regard des dessins annexés dans lesquels :
- la figure 1 est une vue de face d'un mécanisme d'embrayage selon l'invention avec des arrachements locaux pour montrer le diaphragme, les languettes tangentielles, les moyens à rampes et la cassette du dispositif de rattrapage d'usure ;
- la figure 2 est une vue à plus grande échelle d'une partie de la portion supérieure de la figure 1 ;
- la figure 3 est une vue en coupe selon la ligne A-A de la figure 1 ;
- la figure 4 est une vue en coupe selon la ligne B-B de la figure 1 ;
- les figures 5, 6 sont des vues selon les flèches respectivement C et D de la figure 1 ;
- la figure 7 est une vue en coupe selon la ligne E-E de la figure 1 ;
- la figure 8 est une vue selon la flèche F de la ligne 1 ;
- La figure 9 est une vue à plus grande échelle de la partie basse de la figure 3 pour montrer un jeu de languettes ;
- Les figures 10 et 11 sont des demi-vues en coupe analogues à celle des figures 3 et 4 pour un second mode de réalisation de l'invention ;
- La figure 12 est une vue analogue à la figure 8 pour ce second mode de réalisation ;
- La figure 13 est une vue partielle selon la flèche F' de la figure 10 ;
- La figure 14 est une vue partielle selon la flèche G de la figure 13 ;
- Les figures 15 et 16 sont des vues analogues aux figures 13 et 14 pour un troisième mode de réalisation selon l'invention ;
- Les figures 17 et 18 sont des vues analogues aux figures 13 et 14 pour un quatrième mode de réalisation
- Les figures 19 à 21 sont des vues analogues aux figures 10, 11 et 13 pour un cinquième exemple de réalisation de l'invention ;
- La figure 22 est une vue analogue à la figure 1 avec des arrachements locaux pour un sixième exemple de réalisation de l'invention ;
- Les figures 23 à 25 sont des vues en coupe sont des vues en coupe respectivement selon les lignes A'-A', B'-B' et C'-C' de la figure 22.
- La figure 26 est une vue de face de l'ensemble pièce intermédiaire-anneau de réglage à rampes de la figure 22 ;
- La figure 27 est une vue en coupe selon la ligne 27-27 de la figure 26 ;
- La figure 28 est une vue à plus grande échelle de la cassette de la figure 4 ;
- la figure 29 est une vue de l'ensemble pièce intermédiaire à denture-anneau à rampes et moyens d'appui des moyens embrayeurs, pour un septième exemple de réalisation ;
- La figure 30 est une vue en coupe selon la ligne 30-30 de la figure 29 ;
- La figure 31 est une vue selon la flèche 31 de la figure 29 ;
- La figure 32 est une vue analogue à la figure 24 pour ce septième exemple de réalisation ;
- Les figures 33, 34, 36 sont des vues en coupe selon, respectivement, les lignes 33-33, 34-34 et 36-36 de la figure 35 pour un huitième exemple de réalisation ;
- La figure 35 est une vue partielle au niveau d'une des premières languettes pour ce huitième exemple de réalisation ;
- La figure 37 est une vue selon la flèche 37 de la figure 35 ;
- La figure 38 est une vue partielle de face avec des arrachements locaux pour un neuvième exemple de réalisation ;
- Les figures 39 à 41 sont des vues, respectivement, selon les lignes 39-39, 40-40 et la flèche 41 de la figure 38 ;
- La figure 42 est une vue partielle analogue à la figure 2 pour un dixième exemple de réalisation ;
- La figure 43 et une vue montrant la pièce intermédiaire et la seconde languette de la figure 42 ;
- La figure 44 est une vue partielle analogue à la figure 1 pour un onzième exemple de réalisation ;
- Les figures 45 et 46 sont des vues respectivement selon les lignes 45-45 et 46, 47 de la figure 44 ;
- La figure 47 montre le support de la cassette de la figure 46 ;
- La figure 48 est une vue analogue à la figure 47 pour douzième exemple de réalisation ;
- La figure 49 est une vue du support de la figure 47 ;
- La figure 50 est une vue de l'axe de la figure 48 ;
- La figure 51 est une vue en perspective de l'ensemble vis sans fin roue à rochet de la figure 48. Dans les figures les éléments communs seront affectés des mêmes signes de référence ;
- La figure 52 est une vue en perspective de la cassette de la figure 47.

Ces figures représentent un mécanisme d'embrayage formant un ensemble unitaire que l'on vient rapporter usuellement sur un plateau de réaction appartenant à un volant moteur, éventuellement divisé pour formation d'un volant amortisseur ou d'un volant flexible, avec insertion d'un disque de friction entre le plateau de réaction et le plateau de pression que comporte le mécanisme d'embrayage.

S'agissant d'une application pour véhicule automobile, le volant moteur est solidaire en rotation du vilebrequin du moteur à combustion interne, formant arbre menant, tandis que le disque de friction présente à sa périphérie externe des garnitures de friction solidaires, par exemple par rivetage ou par une liaison dépourvue de rivets de fixation, d'un support, éventuellement dédoublé, déformable élastiquement axialement pour formation d'un disque de friction progressif et accouplé de manière rigide ou élastique à un moyeu solidaire en rotation, ici de l'arbre d'entrée de la boîte de vitesses, formant arbre mené. En variante, le support est noyé à sa périphérie externe dans une garniture de friction. Le disque de friction présente dans tous les cas deux faces de friction et au moins une garniture, le support étant axialement élastique ou axialement rigide.

Ce sont la ou les garnitures de fixation qui sont donc destinées à être serrées de manière débrayable entre les plateaux de pression et de réaction pour transmission du couple du moteur de véhicule à l'arbre d'entrée de la boîte de vitesses. Pour ce faire, des moyens embrayeurs à action axiale sont prévus pour serrer les garnitures de friction entre une face de friction 11 ou piste de frottement, que présente frontalement le plateau de pression 1, et une face de friction ou piste de frottement, que présente dorsalement le plateau de réaction, qui peut être porté par un disque flexible solidaire du vilebrequin.

Les moyens embrayeurs forment un équipage avec les moyens débrayeurs prévus pour contrecarrer à volonté l'action des moyens embrayeurs qui prennent appui, d'une part, sur un couvercle 2 et, d'autre part, sur des moyens d'appui 3, portés par le plateau de pression 1, plus précisément par la face dorsale de celui-ci.

Les moyens débrayeurs comportent des leviers de débrayage sur les extrémités internes desquels agit une butée de débrayage commandée manuellement, de manière mécanique ou hydraulique, ou semi-automatique ou automatiquement. La butée peut être donc manoeuvrée par un actionneur à moteur électrique piloté selon des programmes prédéterminés par un calculateur recevant des informations notamment sur les vitesses de rotation des arbres menant et mené et sur l'intention du conducteur de changer de vitesses. L'actionneur peut être relié hydrauliquement ou mécaniquement à la butée de débrayage. Ainsi, la butée de débrayage peut appartenir à un récepteur hydraulique du type concentrique traversé par l'arbre d'entrée de la boîte de vitesses et relié à un émetteur hydraulique manoeuvré par l'actionneur ou manuellement.

Dans les figures, les moyens embrayeurs et débrayeurs appartiennent à une même pièce appelée diaphragme 4.

Ce diaphragme est de forme tronconique à l'état libre et présente une courbe caractéristique (force exercée en fonction de sa déflexion) de forme sinusoïdale. Ainsi, en partant de l'origine, la courbe caractéristique croit jusqu'à un maximum puis décroît jusqu'à un minimum pour croître de nouveau. En position embrayage engagé, le diaphragme occupe une position dans la partie décroissante de sa courbe caractéristique, au voisinage de son maximum.

On obtient la même courbe caractéristique avec une rondelle Belleville.

Pour mémoire, on notera que le diaphragme 4 comporte une partie périphérique externe en forme de rondelle Belleville 41 constituant les moyens embrayeurs. Cette partie périphérique est prolongée radialement vers le centre par une partie centrale fragmentée en doigts radiaux 42, par des fentes borgnes 43.

Les doigts 42 forment des leviers de débrayage, tandis que les fentes 43 débouchent à leur périphérie interne dans l'ouverture centrale du diaphragme 4 et à leur périphérie externe dans des orifices élargis 44 formant les fonds borgnes des fentes 43. Ces orifices 44 ont ici une forme rectangulaire.

Dans ces figures, le mécanisme d'embrayage comporte donc de manière unitaire un ensemble de pièces annulaires, à savoir, un plateau de pression 1, un couvercle 2 et un diaphragme 4, prenant appui, d'une part, sur le couvercle 2, et, d'autre part, sur les moyens d'appui 3 pour serrage des garnitures de friction entre les faces de friction des plateaux de pression 1 et de réaction.

Le plateau de pression 1, en matière moulable, ici en fonte comme le plateau de réaction, est lié en rotation au couvercle 2 tout en pouvant se déplacer axialement par rapport à celui-ci, ici à l'aide de languettes 10, élastiquement déformables axialement. Les languettes 10, dites premières languettes, sont ici d'orientation tangentielle et sont fixées, ici par rivetage, à l'une de leurs extrémités au couvercle et à l'autre de leurs extrémités au plateau de pression 1, plus précisément, chacune à une patte 12 du plateau 1 saillante radialement vers l'extérieur. En variante les languettes 10 sont d'orientation radiale.

En variante, les pattes 12, formant tenons, sont engagées, dans des rainures axiales, formant mortaises du couvercle 2.

Les languettes 10 constituent des moyens de rappel du plateau de pression en direction du couvercle, le diaphragme 4 sollicitant le plateau de pression 1 en direction opposée au couvercle. Plus précisément, le couvercle 2 présente, d'une part, un fond 21 troué centralement et d'orientation transversale et, d'autre part, des moyens de fixation 22 du couvercle 2 au plateau de réaction. Les languettes 10 sollicitent le plateau de pression 1 en direction du fond 21.

Dans les figures représentées, le couvercle a globalement une forme d'assiette creuse et comporte un rebord radial d'extrémité 22 dirigé radialement en direction opposée à l'axe de symétrie axiale X-X que présente le mécanisme d'embrayage. Ce rebord 22 se raccorde par une jupe annulaire 23 d'orientation axiale, au fond 21. La jupe 23 est étagée en diamètre et ouverte au niveau des languettes 10, qui rappellent élastiquement le plateau de pression en direction du fond du couvercle 2.

Le rebord 22 constitue les moyens de fixation et est fragmenté en plages 28, 27 décalées axialement pour la fixation des languettes 10 et pour la fixation au plateau de réaction. Les plages de fixation 27 au plateau de réaction sont trouées pour le passage d'organes de fixation au plateau de réaction, ici, des vis. En variante, le plateau de réaction peut être fixé sur un disque flexible solidaire du vilebrequin. Le couvercle 2 peut être fixé par sa jupe 23 sur le disque flexible. Par exemple, la jupe 23 présente à son extrémité libre des pattes fixées par soudage ou rivetage sur le disque flexible. Le diaphragme 4 s'appuie à la périphérie externe de sa rondelle Belleville 41 sur les moyens d'appuis 3, tandis que la périphérie interne de sa rondelle Belleville 41 est montée de manière basculante entre deux appuis en vis-à-vis, respectivement un appui secondaire 25 porté par des pattes de fixation 26 et un appui primaire 24, porté par le fond 21.

Les pattes de fixation 26 sont issues par découpe et pliage de la périphérie interne du fond 21 du couvercle 2, ici en tôle emboutie.

Les pattes 26 sont réparties circonférentiellement de manière régulière et sont d'orientation axiale.

Les pattes 26 traversent axialement les orifices élargis 44 du diaphragme 4 et ont, au-delà du diaphragme 4, une extrémité libre pliée radialement vers l'extérieur, c'est-à-dire radialement en direction opposée à l'axe de l'ensemble pour formation d'un coude de calage pour une couronne jonc 125, de forme tronconique, présentant à sa périphérie externe une arête arrondie 25 constituant l'appui secondaire. L'appui primaire 24 a la forme d'un jonc annulaire formé ici par emboutissage du fond 21 du couvercle 2. Ce jonc 24 est ici fragmenté.

En variante, ce jonc 24 est rapporté sur le couvercle 2. La périphérie interne de la rondelle Belleville 41 du diaphragme est intercalée axialement entre ces appuis 24, 25 en vis-à-vis l'un de l'autre. En position embrayage engagé, le diaphragme 4 est en appui sur l'appui primaire 24 et sur les moyens d'appui 3 du plateau de pression.

En agissant en poussant sur les extrémités internes des doigts 42 du diaphragme 4 à l'aide d'une butée de débrayage (non représentée), on fait basculer le diaphragme 4, qui prend alors appui sur l'appui secondaire 25, pour annuler la charge qu'il exerce sur le plateau de pression 1 via les moyens d'appui 3 ; les languettes 10 rappelant le plateau de pression en direction du fond 21 du couvercle 2 pour libérer les garnitures de friction et désengager l'embrayage.

Bien entendu, l'appui secondaire peut être discontinu en étant formé par les extrémités libres des pattes de fixation 26 conformées en conséquence dans le document FR-A-2 242 892 précité.

Les pattes de fixation 26 alternent ici circonférentiellement avec des pattes de butée 5, d'orientation transversale.

Ces pattes de butée sont issues d'un seul tenant du fond 21 du couvercle par découpe et s'étendent à la périphérie interne du fond 21 du couvercle 2, qui a intérieurement ainsi une forme dentelée.

Pour plus de précisions, on se reportera au document FR-A-2 242 892 montrant les pattes de fixation 26 avant leur pliage et les pattes de butée 5, qui sont plus larges circonférentiellement que les pattes de fixation 26.

Les pattes de butée 5 recouvrent ici une fente 43 séparant deux doigts 42 consécutifs.

Bien entendu, tout cela dépend de la taille du couvercle. Les pattes de butée 5 forment donc une butée pour au moins deux doigts 42, formant leviers de débrayage. Ces pattes de butée 5 ont ici une forme trapézoïdale. Le diamètre interne des pattes de butée 5 est inférieur au diamètre interne des pattes de fixation 26 après pliage. Les pattes 5, 26 s'étendent radialement en dessous de l'appui primaire 24 de forme annulaire. Une échancrure 6 sépare deux pattes de butée 5 consécutives. Une patte de fixation 26 est implantée au milieu de l'échancrure 6 pour pénétrer axialement dans un orifice élargi 44 du diaphragme 4.

La périphérie interne des pattes de butée 5 s'étend radialement en dessous des orifices élargis 44. Les pattes de fixation 26 constituent des moyens de fixation pour montage basculant ou pivotant du diaphragme 4 sur le couvercle. En variante, on peut supprimer les pattes de fixation et le couvercle peut ne comporter que des pattes de butée comme décrit dans le document FR-A-2 420 690. Dans ce cas, les pattes de fixation sont trouées pour montage d'une pièce annulaire en forme de peigne, de colonnettes à tête profilée formant appui secondaire, etc. Toutes les formes de réalisation, telles également les agrafes, des colonnettes portant deux joncs d'appui etc., décrite dans ce document FR-A-2 420 690, auquel on se reportera pour plus de précisions, sont envisageables. Les pattes de butée 5, en forme de languette, peuvent donc être des pattes de fixation. En variante, on coupe l'extrémité des pattes de fixation 26 pour ne conserver que la partie axiale de celle-ci. Les pattes 26 forment alors des pattes de centrage et les pattes de butée 5, des pattes de fixation de manière précitée. En variante, le couvercle ne présente des pattes de butée, dont certaines forment des pattes de fixation.

En variante, les pattes de fixation 26 peuvent porter un faux diaphragme, c'est-à-dire une pièce dont la partie centrale est fragmentée en doigts comme celle d'un diaphragme, tandis que la partie périphérique annulaire est dépourvue d'élasticité ou présente une faible élasticité. Par exemple cette partie périphérique annulaire, en forme de rondelle, est dotée de fentes radiales borgnes débouchante radialement à la périphérie externe du faux diaphragme et de la partie annulaire en forme de rondelle.

La rondelle du faux diaphragme est donc globalement plate à l'état libre ainsi que le faux diaphragme.

Une rondelle Belleville prend alors appui à sa périphérie externe sur le couvercle et a sa périphérie interne sur la rondelle périphérique du faux diaphragme. Un tel exemple de réalisation est décrit dans le document DE-A-4 326 501 auquel on se reportera pour plus de précisions.

Bien entendu, à la lumière de ce document, on voit que le faux diaphragme peut être remplacé par une pluralité de leviers de débrayage individuels montés de manière basculante ou pivotante sur le couvercle par l'intermédiaire des moyens de fixation portés par le couvercle, avec intervention de deux rondelles Belleville montées en série pour formation des moyens embrayeurs.

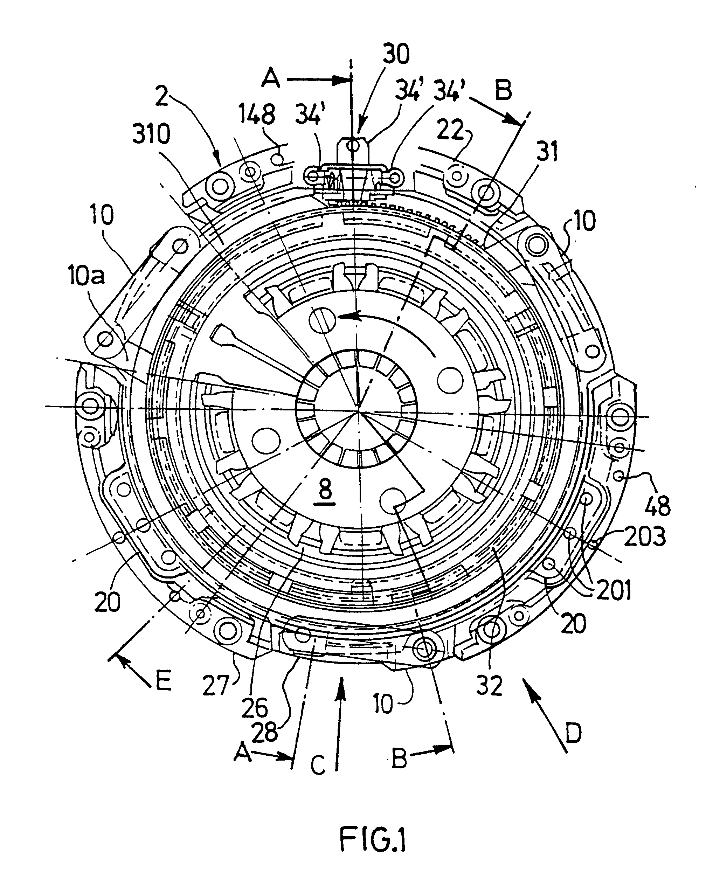

Dans tous les cas, le couvercle 2 porte des leviers de débrayage 42 montées de manière pivotante ou basculante sur le couvercle 2 et les moyens embrayeurs peuvent comporter deux rondelles Belleville montées en série comme dans le document DE-A-4 326 501 ou un diaphragme montée en série avec une rondelle d'assistance comme décrit dans le document FR-A-9 711 058 du 5 septembre 1997 publiée sous le numéro FR-A-2 753 758 qui divulgue, par ailleurs un dispositif de rattrapage d'usure à roue à rochet - vis sans fin et denture, du type de celui du mode de réalisation de la figure 1 de la présente invention.

De nombreux embrayages dotés d'un couvercle à pattes de butée, formant éventuellement pattes de fixation, sont fabriqués actuellement.

Ici, on tire partie de ce type de couvercle pour insérer une cale entre les pattes de butée et les leviers de débrayage afin de pouvoir livrer au constructeur automobile ou au garagiste, un mécanisme d'embrayage neuf ou reconditionné dans une position de livraison dans laquelle le plateau de pression est plus près du fond 21 du couvercle 2, qu'il ne l'est en position de stockage lorsque les leviers de débrayage sont en appui contre les pattes de butées.

Plus précisément, une pièce de support 8 porte à sa périphérie externe des pattes de calage 7 saillantes radialement vers l'extérieur. La pièce de support 8 est en contact avec une moins une pluralité des leviers de débrayage 42, tandis que les pattes de calage 7 sont en contact avec la face des pattes de butée 5 tournée vers les leviers de débrayage 42 en sorte que les pattes de calage 7 et la pièce de support 8 sont insérées axialement entre les leviers de débrayage 42 et les pattes de butées 5 par un montage du type baïonnette.

Dans les figures, la pièce de support 8 à une forme annulaire et présente des moyens 9 pour venir en prise avec un outil permettant de faire tourner la pièce de support.

Ces moyens 9 consistent ici en des trous. L'anneau 8 formant la pièce de support, s'étend radialement en dessous des pattes de butée 5 et radialement au-dessus de la périphérie interne des doigts 42 du diaphragme, au voisinage de ladite périphérie interne.

L'anneau est ici fermé en étant en contact avec tous les doigts du diaphragme 4. L'anneau 8 a une grande hauteur en sorte qu'il constitue une plaque circulaire ouverte centralement.

Ainsi, les pattes 8 sont introduites initialement chacune dans une échancrure 6 séparant deux pattes de butée 5 consécutives. En appuyant centralement sur l'anneau 8, on déplace les doigts du diaphragme 4. On fait alors tourner, à l'aide d'un outil pénétrant dans les trous 9, l'anneau 8 pour amener les pattes de calage 7 sous les pattes de butée 5, après, on relâche la charge exercée sur l'anneau 8. Les pattes de calage 7 sont ici circonférentiellement moins large que les pattes de butée 5 de forme trapézoïdale.

Plus précisément, les pattes de calage 7 ont ici une forme globalement rectangulaire avec des arêtes arrondies. La longueur circonférentielle de la patte 7, plus longue circonférentiellement que haute, est globalement égale à la longueur circonférentielle de la périphérie interne de la patte de butée 5. Les pattes 7 s'étendent radialement en dessous des pattes de fixation 26. En variante, les pattes 7 peuvent avoir une autre forme par exemple trapézoïdale, triangulaire, semi-circulaire ou carré.

L'outil permettant de faire tourner l'anneau 8 présente des pions engagés dans les trous 9.

Bien entendu, l'anneau 8 peut être ouvert et ainsi ne pas venir en contact avec tous les doigts 42 du diaphragme. Il est, dans ce cas, en forme de cintre circulaire.

Le nombre de pattes de calage 7 dépend des applications. Ici, une patte de calage 7 est prévu par patte de butée. Bien entendu, le nombre de pattes de calage 7 peut être inférieur au nombre de pattes de butée 5.

Il est prévu au moins deux pattes de calage en position diamétralement opposée.

Bien entendu, les trous 9 peuvent être remplacés par des échancrures ou des pattes formées à la périphérie interne de l'anneau 8.

Dans toutes les figures, la partie centrale du fond 21 du couvercle à la même forme et on voit une flèche symbolisant le sens de rotation de l'anneau 8 lors de son démontage.

L'anneau 8 est ici d'un seul tenant avec les pattes 7 et est en tôle emboutie.

Cet anneau peut être doté d'un revêtement à faible coefficient de frottement au niveau de sa portion destinée à venir en contact avec les doigts 42 et au niveau de la face externe des pattes 7 tournée en direction opposée du diaphragme.

Cette disposition facilite la rotation de la pièce de support 8.

Bien entendu, l'anneau 8 peut être en une autre matière par exemple en matériau composite renforcé par des fibres ou à base d'aluminium. Il peut donc être en matière moulable. Après montage du mécanisme d'embrayage sur le plateau de réaction ou un disque flexible solidaire de celui-ci on démonte la cale à l'aide de l'outil précité.

Grâce à la cale, les vis de fixation du couvercle 2 au plateau de réaction peuvent être plus courtes et les languettes sont protégées avant fixation du mécanisme d'embrayage au plateau de réaction. La pièce de support 8 avec ses pattes 7, constitue un outil de montage du mécanisme d'embrayage sur le plateau de réaction, que l'on enlève après la fixation du couvercle sur le dit plateau de réaction. L'inverse est possible en sorte que cela peut constituer un outil de démontage permettant de décoller les garnitures de friction du plateau de pression 1. Ici, la cale permet de ménager en position de livraison les pièces d'un dispositif de rattrapage d'usure ainsi que les languettes 10.

Plus précisément, dans les figures 1 à 8, l'anneau 8 avec ses pattes monoblocs permet le montage sans destruction d'une cassette 30 appartenant à un dispositif de rattrapage d'usure permettant, en service, de compenser l'usure due principalement à la ou aux garnitures de friction du disque de friction. La cassette 30 est montée sur le couvercle 2 avant la fixation du plateau de pression 1 au couvercle.

Plus précisément, on fixe d'abord le diaphragme 4 sur le couvercle 1 à l'aide des pattes de fixation 26 de manière précitée, le diaphragme 4 étant monté basculant entre les deux appuis 24, 25. Ensuite, on monte de manière précitée l'anneau 8 avec ses pattes 7 entre les pattes de butée 5 et la périphérie interne des doigts 42 du diaphragme 4. Le diaphragme alors occupe une position plane correspondante à celle qu'il occupe une fois que le mécanisme d'embrayage est monté sur le couvercle 2.

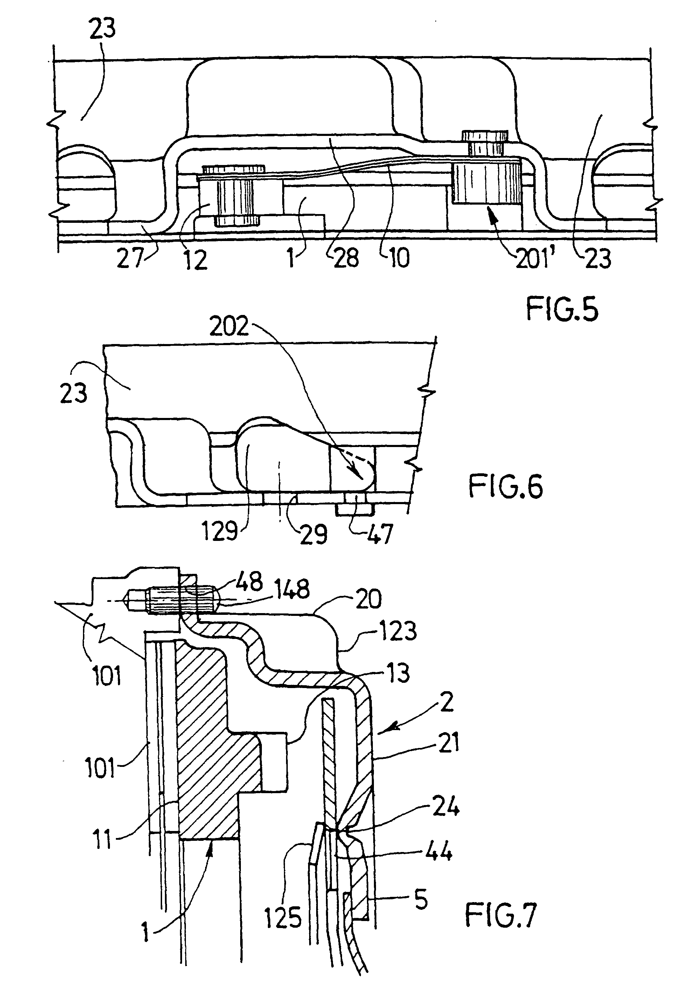

Dans cette position, l'embrayage est engagé. A la figure 7, on a représenté de manière schématique en 100 le plateau de réaction et en 101 le disque de friction, plus précisément les garnitures de friction de celui-ci permet de réduire l'encombrement axial du mécanisme d'embrayage et le dispositif de rattrapage d'usure maintient le diaphragme dans cette position, qui correspond à la position embrayage engagé neuf. Après, on fixe la cassette 30 et on procède à une opération de prééquilibrage.

Puis on approche le plateau de pression 1 porteur ici de moyens à rampes 32 et donc d'épaisseur variable de manière décrite ci-après.

Ensuite, on monte le plateau de pression 1 sur le couvercle 2. Plus précisément, le plateau 1 étant équipé des languettes 10, on fixe les autres extrémités des languettes 10 au couvercle 2.

Enfin, on procède en final à une opération d'équilibrage.

Ici, la cassette 30 est montée dans un logement 20 formé en surépaisseur, ici par emboutissage, dans le couvercle 2, au niveau de son rebord de fixation 22. Le logement 20, formé à la périphérie externe du couvercle 2, affecte le rebord 22 ainsi que la jupe 23 du plateau surélevée ainsi au niveau des logements 20.

Le fond axial du logement 20 est formé par une zone transversale 123 de la jupe 23 au fond 21 du couvercle. Une fenêtre 121 est formée dans cette zone 123 parallèle au fond 21 en étant décalée axialement en direction du rebord 22 par rapport au fond 21.

Le nombre des languettes 10 dépend des applications. Ici, trois jeux de languettes 10 superposées, sont prévus ainsi que trois logements 20. Les logements 20 et les languettes 10 sont réparties circonférentiellement de manière régulière et ce de manière alternée.

Un seul des logements 20 est doté d'une fenêtre 121, à savoir celui servant à loger la cassette 30. Chaque jeu de languette 10 comporte au moins deux languettes 10 superposées. Ici, trois languettes 10, élastiquement déformables axialement, sont prévues par jeu de languettes 10.

La cassette 30, décrite ci-après, crée un déséquilibrage. Pour cette raison, on réalise avant montage du plateau de pression 1, un prééquilibrage à l'aide de rivets 201 de prééquilibrage montés sur les fonds axiaux 123 non troués des logements 20. Trois rivets 201 sont prévus par logement 20, non affectés au logement de la cassette. Un autre rivet de prééquilibrage 201' est prévu diamétralement opposé à la cassette 30. Ce rivet 201' sert à la fixation d'un jeu de languettes 10 au couvercle 10, comme visible à la figure 5. Le plateau de pression 1 est entaillé localement au niveau du rivet 201'. Tout ceci est du fait que le plateau de pression est entaillé au niveau de la cassette 30 pour créer un dégagement.

En final, on place des rivets d'équilibrage 202 aux endroits souhaités pour équilibrer le mécanisme d'embrayage.

Le rebord 22 présente à cet effet, par avance, des trous d'équilibrage 47 pour le montage du ou des rivets d'équilibrage 202. Pour ce faire, de nombreux trous 47 doivent être prévus pour placer les rivets 202.

Le rebord 22 présente également, d'une part, des trous de fixation 29, pour passage des organes de fixation - tels que des vis ou des rivets - du rebord 22 au plateau de réaction et, d'autre part, des trous de centrage 48 pour le passage de pions de centrage 148 (figure 7) portés par le couvercle.

Des ouvertures 129 sont réalisées dans la jupe 23, au niveau des trous de fixation 29 pour le passage ici des têtes des vis de fixation du couvercle 2 au plateau de réaction.

Les ouvertures 129 ont une forme non symétrique. Plus précisément, on voit en pointillé, à la figure 1, l'encombrement d'une tête d'une vis de fixation et d'un rivet d'équilibrage 202. Les trous de fixation 29 et d'équilibrage 47 sont voisins l'un de l'autre. Une paire de trous 29, 47 est prévue par ouverture 129, permettant ainsi d'augmenter la surface d'appui du rebord 22 à ce niveau pour les têtes des vis de fixation. L'ouverture 129 est donc allongée circonférentiellement et est plus profonde au niveau du trou 29 ; chacun des trous 29, 47 étant implanté à l'extrémité circonférentielle d'une ouverture 129.

Chaque rivet d'équilibrage 202 est fixé, comme les vis de fixation, au niveau d'une zone élargie 122 du rebord 22, formée à la faveur de l'ouverture 129.

Le rivet 202 ne déborde pas de la zone 122, tandis que les têtes de vis de fixation débordent par rapport aux zones 122. Des ouvertures supplémentaires 203 sont prévues dans le rebord 22 au-dessus des logements 20.

Le rebord 22 comporte ainsi trois plages de fixation 27 pour contact avec le plateau de réaction 100, ici légèrement de forme creuse comme visible à la figure 7. Ces plages 27 (figure 5) alternent circonférentiellement avec les plages 28, décalées axialement par rapport aux plages 27 en direction du fond 21 du couvercle 2 pour fixation, ici par rivetage, des languettes 10, au couvercle. La jupe 23 est donc ouverte à ce niveau ce qui permet le passage de pattes de fixation 12, que présente le plateau de pression 1, en saillie radiale à sa périphérie externe. Les plages 27 servant à la fixation du couvercle 2, sont plus longues que les plages 28 de fixation des languettes reliées de manière continue aux plages 27, pour formation d'un auvent (figure 5).

Les plages 27 sont affectées centralement par des logements 20 en étant moins larges à cet endroit. Chaque extrémité d'une plage 27 est affecté d'une zone élargie 122 et d'une ouverture 129.

Les trous 29, 47 sont donc disposés, ainsi que les zones 122, de part et d'autre d'un logement 20 aux extrémités d'une zone 122.

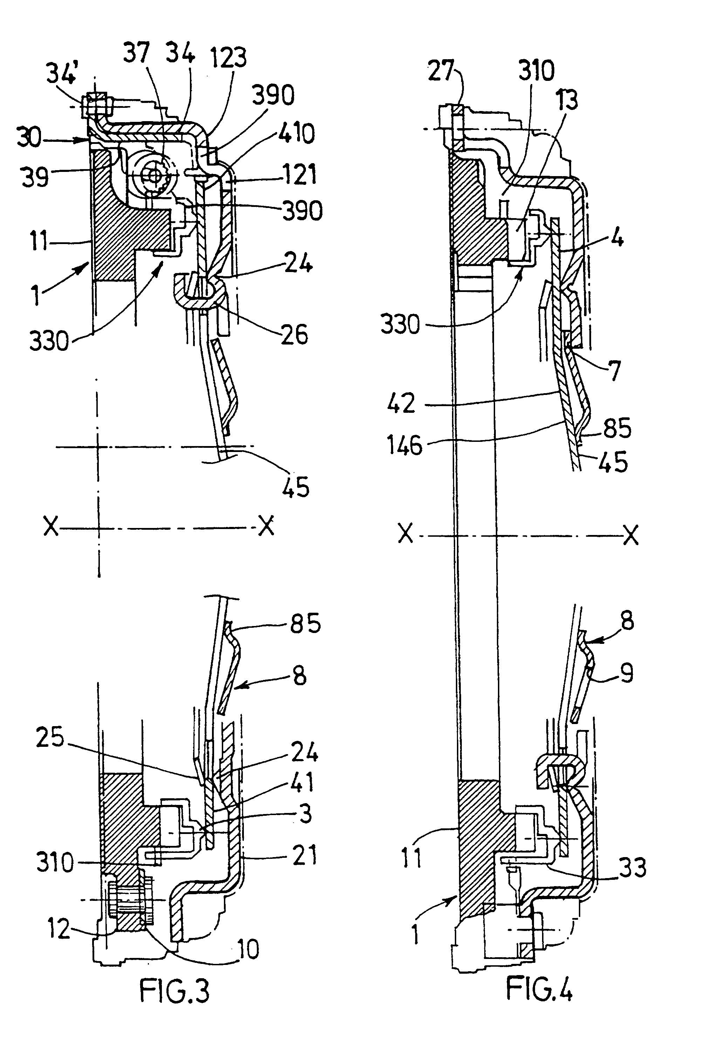

Ceci permet de bien équilibrer le mécanisme d'embrayage. Il en est d'autant plus ainsi que, figure 3, le plateau de pression est entaillé pour créer un dégagement pour la cassette 30. Cette cassette 30 comporte un support 34 en forme de U avec une âme centrale s'étendant au contact de la déformation de la jupe 23 formant le sommet du logement 20 et deux ailes latérales, qui sont trouées par le passage d'un axe 35 solidaire d'une vis sans fin 36, monobloc avec une roue à rochet 37 interposées entre les deux ailes du support 34. La vis 36 est adjacente à l'une des ailes, tandis qu'un ressort hélicoïdal de rattrapage 38 est interposé entre la roue à rochet et l'autre aile.

L'axe 35 est rapporté à l'intérieur de la vis 36 et de la roue 37, par exemple par emmanchement à force.

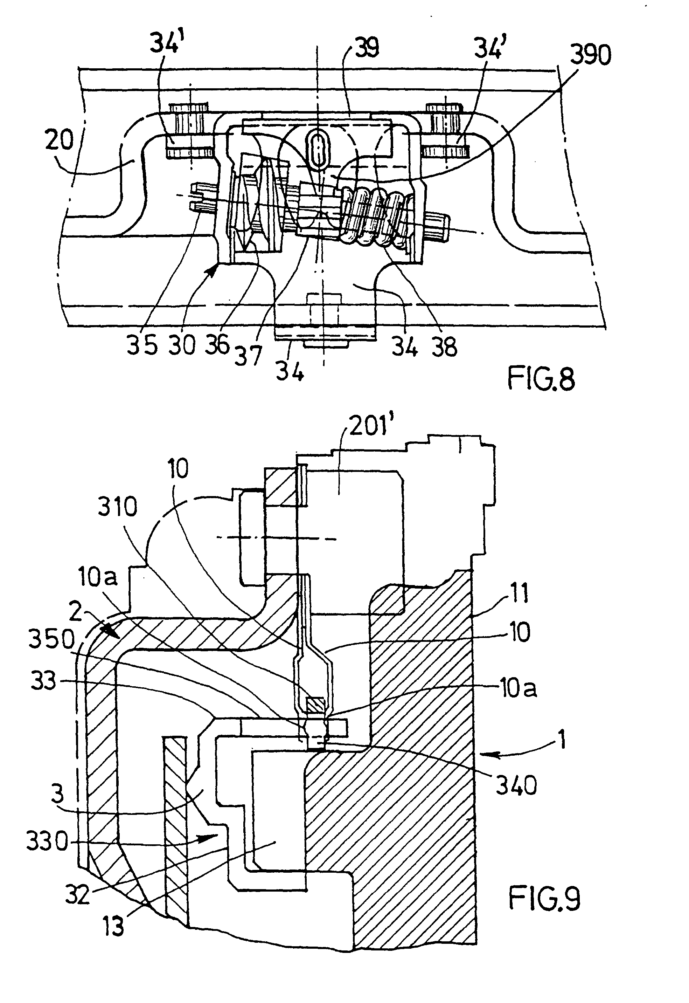

Un organe élastique 39 est monté au contact de la face interne de l'âme du support et la vis 36 et entre l'autre aile du support et le ressort 38 (figure 8).

L'organe élastique 39, moins épais que le support 34 et métallique, présente un rebord en oblique prolongé par un retour portant une languette de commande 390 coopérant avec les dents de la roue à rochet 37, et avec un actionneur 410 formé par un appendice externe de la rondelle Belleville 41 du diaphragme. Le retour portant la languette de commande à une forme non symétrique car l'axe 35 est incliné.

Le support 34 comporte trois pattes de fixation 34', pour sa fixation par rivetage respectivement au rebord 22 et à la zone 123 et donc au couvercle.

La vis sans fin 36 est disposée tangentiellement par rapport à une denture 31 s'étendant radialement vers l'extérieur en direction opposée de l'axe X-X de symétrie axiale du mécanisme d'embrayage et de l'embrayage. La denture 31 appartient selon l'invention à une pièce intermédiaire 310, ici en forme de rondelle.

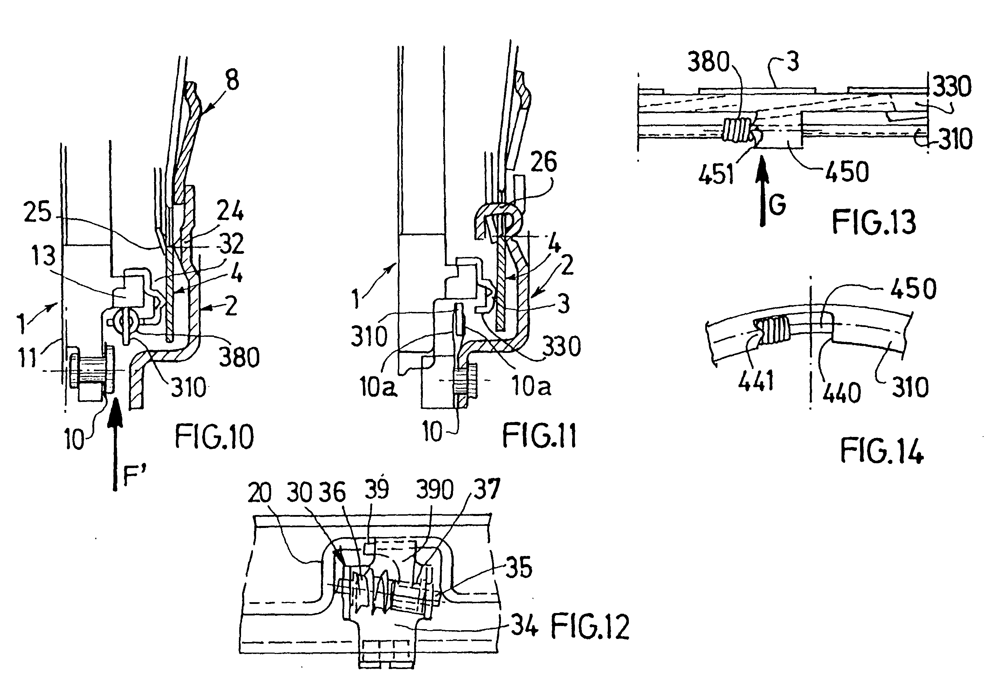

La pièce intermédiaire est ici globalement axialement fixe. Plus précisément, chaque jeu de premières languettes 10 comporte au moins deux languettes dotées chacune d'une protubérance 10a dirigée globalement radialement vers l'intérieur. Les protubérances 10a ont une extrémité globalement en forme de secteur annulaire. La rondelle 310 est pincée axialement entre deux protubérances 10a comme mieux visible à la figure 9, en sorte qu'elle est globalement axialement fixe car les protubérances 10a se déforment faiblement axialement compte tenu de leur faible hauteur radiale.

Les protubérances 10a sont implantées à l'extrémité de fixation des languettes 10, axialement élastiques, au couvercle.

Ici, les languettes 10 ne sont pas identiques au niveau de leur fixation au couvercle. La languette intermédiaire de chaque jeu de premières languettes 10 est dépourvue de protubérance et consiste en une languette classique. Les deux autres languettes d'extrémité présentent chacune une protubérance 10a déformée localement pour venir en appui sur la face latérale concernée de la rondelle intermédiaire 310, intercalée ainsi à serrage déterminé entre les deux protubérances 10a, dont l'une est emboutie plus profondément que l'autre. La rondelle 310 est métallique.

La rondelle 310 est liée, directement ou indirectement, en rotation suivant l'invention à un anneau 330, ici métallique. Dans ce mode de réalisation l'anneau 330 est en tôle emboutie et présente un rebord annulaire d'orientation axiale 33, qui ici est lié en rotation par une liaison 340, 350 à coopération de formes avec la rondelle intermédiaire 310. Cette liaison 340, 350 autorise un déplacement axial de l'anneau 330 par rapport à la rondelle 310 venant en prise par sa denture 31 avec la vis sans fin 36.

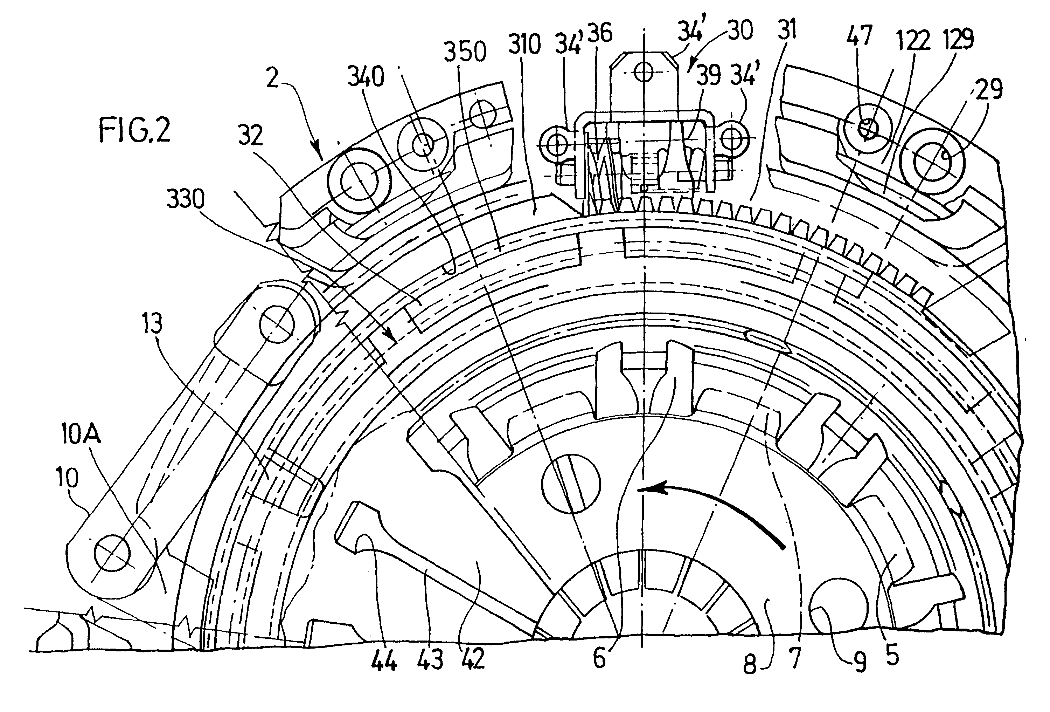

La liaison par coopération de formes est du type tenons - mortaises. La rondelle 310 présente ici à sa périphérie interne trois mortaises en forme d'encoches 340 d'orientation radiale ouvertes radialement vers l'intérieur. La denture 31 est formée à la périphérie externe de la rondelle 310 à la faveur d'une creusure de celle-ci (figure 2).

L'anneau 330 présente un rebord 33 en forme de peigne avec trois pattes d'orientation axiale 350 traversant les encoches 340 et ce avec un jeu circonférentiel de montage.

La rondelle intermédiaire 310 engrène donc ici de manière rigide avec l'anneau 330. D'autre type de moyens d'engrènement peuvent être prévus.

Par exemple, la rondelle peut présenter à sa périphérie interne une denture engrenant avec une denture ménagée à la périphérie externe du rebord 33. Chaque denture peut consister par exemple en des cannelures.

L'anneau 330 à globalement en section la forme d'un U dont l'aile extérieure est constitué par le rebord 33 à pattes 350 et l'aile intérieur est destinée à être centrée par la périphérie interne de plots 13 saillants axialement et venus de moulage du plateau de pression. Les ailes de l'anneau 330 sont d'orientation axiales, le fond transversal de l'anneau portant les moyens d'appui 3 et des rampes.

Plus précisément, l'anneau est en contact intime par sa périphérie interne avec la périphérie externe d'une surépaisseur fragmentée en plots 13, que présente dorsalement en saillie axiale le plateau de pression. Le rebord 33 se raccorde à un bossage annulaire fragmenté. Ce bossage constitue les moyens d'appui 3 pour la périphérie externe de la rondelle Belleville 41 du diaphragme.

Radialement, en dessous du bossage 3, il est prévu des rampes 32 pour coopérer avec la face d'extrémité transversale, avantageusement chanfreinée, des plots 13 formant contre-rampes. Ainsi, en cas d'usure, le diaphragme agit par son actionneur 410 externe sur la languette de commande 390 pour faire tourner la roue à rochet lors de l'opération de réembrayage afin d'armer le ressort 38, la liaison 340, 350 empêchant une rotation en sens inverse de la roue 37 et donc de la vis 36, qui peut entraîner la denture 31 mais pas l'inverse. Lorsque le ressort 38 est suffisamment armé, la vis 36 peut entraîner en rotation la denture 31 pour faire tourner les rampes 32 au contact des plots 13, afin d'augmenter l'épaisseur du plateau de pression pour compenser l'usure des garnitures du disque de friction pour que le diaphragme occupe la même position.

Pour plus de précisions, on se reportera à la demande FR-A-2 753 503 du 17 septembre 1995 Néanmoins, on notera que lors des opérations d'embrayage et de débrayage, l'anneau 330 peut se déplacer axialement, avec le plateau de pression, par rapport à la rondelle 310 mobile en rotation sous l'action de la vis 36. Aucun frottement ne se produit entre la vis 36 et la denture 31 lors de ces déplacements axiaux de l'anneau 330 puisque la rondelle 310 est globalement axialement fixe, ici par rapport au couvercle grâce aux protubérances. Ainsi, cela ne perturbe pas l'opération de rattrapage d'usure. La présence d'un cliquet anti-retour n'est plus nécessaire.

La cale 7, 8 évite donc une détérioration de la cassette 30, plus précisément de son organe élastique 39 et de sa languette de commande.

On notera que les doigts 42 présentent une extrémité interne 45, décalée axialement par rapport à la zone d'enracinement 46 des doigts 42 à la rondelle Belleville 41. Cette zone 46 est dans le plan de la rondelle 41 et comporte les orifices 44. Elle se raccorde par un tronçon oblique 146 à l'extrémité interne 45 décalée axialement en direction opposée du fond 21 du couvercle.

L'anneau 8 présente à sa périphérie interne un bourrelet 85 dirigé axialement en direction opposée au fond 21 du couvercle 2 pour contact local avec l'extrémité interne 45. Les pattes 7 sont dans le plan de l'anneau 8.

Ainsi, les pattes 7 prennent appui contre la face interne, dirigée vers les doigts 42, des pattes de butée 5 et le bourrelet 85 est en contact avec la face externe de l'extrémité interne 45 du diaphragme.

La cale 7, 8 ne fait donc pas saillie axialement par rapport au fond 21 du couvercle et le plateau de pression est rentré, en sorte que le mécanisme d'embrayage est peut encombrant axialement.

Après fixation du couvercle 2 par vissage au plateau de réaction 10, on appuie sur la périphérie interne de l'anneau 8, comme pour débrayer, et on tourne l'anneau selon la flèche de la figure 1 pour démonter la cale 7, 8.

Le plateau de pression 1 porte donc l'anneau creux 330, (32, 33, 3) - formant moyens de rampes - et est d'épaisseur variable entre sa faces de friction 11 et les moyens d'appui 3 pour compenser l'usure des garnitures de friction.

Dans tous les cas, les pattes de calage 7 sont décalées axialement par rapport à la périphérie interne de la pièce de support 8, formé par le rebord 81 ou le bourrelet 85.

Bien entendu, l'anneau 8 peut être équipé de moyens de préhension pour sa rotation à l'aide d'un outil afin d'amener les pattes de calage sous les pattes de butée.

L'anneau 8 peut, à la manière d'un bouton de commande, être doté d'une barrette saillante en direction opposée au diaphragme. Les moyens 9 peuvent donc consister en des saillies. D'une manière générale, la longueur circonférentielle d'une patte de calage 7 est inférieure à la longueur circonférentielle entre deux pattes de butée 5 consécutives pour que les pattes 7 puissent être introduites dans les échancrures 6 afin d'effectuer le montage baïonnette.

Des ouvertures peuvent être ménagées entre deux doigts 42 consécutifs formant leviers de débrayage pour passage d'un ou de plusieurs outils permettant un accès à des vis de fixation du plateau de réaction au vilebrequin du moteur du véhicule. Dans ce cas, les trous 9 des figures 1 à 8 sont en regard desdites ouvertures pour démontage du plateau de réaction fixé directement ou indirectement, par exemple par l'intermédiaire d'un flasque ou d'une masse, au vilebrequin.

De manière précitée, les moyens embrayeurs peuvent comporter une ou plusieurs rondelles(s) Belleville montée(s) en série, les moyens débrayeurs peuvent être distincts des moyens débrayeurs.

Les premières languettes 10 peuvent être d'orientation radiale.

Dans tous les cas, les premières languettes constituent des moyens pour lier en rotation le plateau de pression au couvercle tout en autorisant un mouvement axial du plateau de pression par rapport au couvercle.

Les pattes de butées, dirigées radialement vers l'intérieur, c'est-à-dire vers l'axe X-X peuvent être également des pattes de fixation ; les pattes de calage 7 passant alors sous les moyens de fixation portées par les pattes de butées lors du montage baïonnette.

Le décalage axial des pattes de calage par rapport à la périphérie interne de la pièce de support facilite le montage baïonnette et crée un jeu entre les pattes de calage et les leviers de débrayage. En outre, cela évite une déformation de la couronne jonc 125, ou d'une manière générale de l'appui secondaire 25.

Les leviers de débrayage 42 sont, dans tous les cas, en contact avec les moyens embrayeurs en appui direct avec les moyens d'appui 3 ou en appui indirect sur les moyens d'appui 3 par l'intermédiaire des leviers de débrayage. Les moyens débrayeurs agissent à volonté sur les moyens embrayeurs pour contrecarrer l'action de ceux-ci.

En variante, les moyens embrayeurs peuvent consister en une pluralité de ressorts à boudin prenant appui sur un faux diaphragme et sur le couvercle.

Bien entendu, les pattes de calage 7 peuvent être rapportées à fixation sur la pièce de support, par exemple par rivetage, soudage, etc.

En variante, la liaison en rotation entre la pièce intermédiaire et l'anneau 330 est réalisée par des languettes tangentielles, dites secondes languettes, attelées à l'une de leurs extrémités à l'anneau 330 et à leur autre extrémité, à la pièce intermédiaire.

Les secondes languettes autorisent un déplacement axial de l'anneau par rapport à la pièce intermédiaire avantageusement en forme de rondelle. Les frottements entre l'anneau 330 et la pièce intermédiaire sont ainsi éliminés.

Bien entendu, la pièce intermédiaire peut être rendu axialement fixe par des protubérances distinctes des languettes 10.Cette pièce est axialement fixe par rapport au couvercle en étant agencé à l'intérieur de celui-ci.

Cette pièce est centrée par le plateau de pression.

Dans tous les cas, on évite un pincement fort de la pièce d'entraînement pour que celle-ci puisse tourner. On notera que le plateau de pression centre la pièce intermédiaire.

Les échancrures de la pièce intermédiaire peuvent être fermées.

La denture 31 peut être formée directement à la périphérie externe de la pièce intermédiaire, sachant que dans les figures la denture est formée dans le fond d'une échancrure de forme trapézoïdale réalisée à la périphérie externe de la pièce intermédiaire.

Dans toutes les figures, le couvercle 2 et donc le mécanisme d'embrayage se fixe par l'intermédiaire de son rebord de fixation 22 ou de sa jupe 23 sur un volant moteur fixé sur le vilebrequin du moteur de véhicule, le dit volant comportant un plateau de réaction et étant éventuellement divisé pour formation d'un volant amortisseur de torsion - dit aussi double volant amortisseur - ou d'un volant flexible.

Grâce à l'invention, le ressort de rattrapage 38 peut ne pas appartenir à la cassette 30 et la pièce intermédiaire peut être liée élastiquement en rotation avec l'anneau à rampes. En effet, on peut faire intervenir le ressort de rattrapage entre la pièce intermédiaire 310 et l'anneau 330 à rampes 32 constituant un anneau de réglage afin que les moyens embrayeurs 4 occupent toujours la même position lorsque l'embrayage est engagé ou embrayé.

Ainsi, dans le mode de réalisation des figures 10 à 14, on voit en 380 un ressort de rattrapage, du type ressort à boudin, prenant appui à l'une des extrémités circonférentielles sur un bord latéral 441 d'une échancrure sous forme d'encoche 440, formant mortaise, ménagée à la périphérie interne de la pièce intermédiaire 310 en forme de rondelle plane comme dans les figures 1 à 10. L'autre extrémité du ressort de rattrapage 380 prend appui sur le bord latéral 451 d'une patte d'orientation axiale 450 issue d'un seul tenant de l'anneau 330 à rampes 32, constituant un anneau de réglage à rampes 32 et moyens d'appui 3 comme dans les figures 1 à 9. Le ressort 380 sollicite l'autre bord latéral de la patte 450 en appui sur l'autre bord latéral de l'encoche 440.

Les bords 451, 441 présentent une pointe en forme de triangle. Le bord 451 s'étend en vis à vis du bord 441 en sorte que le ressort de rattrapage 380 est bien maintenu, les pointes des bords 451, 441 pénétrant dans le ressort 380 pour bien retenir celui-ci. Les pointes des bords 441, 451 s'étendent dans des plans perpendiculaires. Les autres bords latéraux de respectivement de la patte 450 et de l'encoche 440 sont droits en sorte que le bord latéral droit de la patte 450 vient en contact avec le bord latéral droit de l'encoche 440 sous la sollicitation du ressort 380.

Bien entendu, suivant une caractéristique, la largeur circonférentielle de la patte 450 d'orientation axiale, formant tenon, est inférieure à la largeur circonférentielle de l'encoche 440 d'orientation radiale à l'intérieur de laquelle sont montés sur le ressort 380 et la patte 450.

La hauteur de la patte 450 est inférieure à la hauteur de l'encoche 440, comme dans le mode de réalisation des figures 1 à 9.

Bien entendu, le nombre de pattes 450, de ressorts 380 et d'encoches 440 dépend des applications. Grâce à cette disposition la cassette 30, montée dans le logement 20, est simplifiée car la roue à rochet est adjacente à l'une des ailes du support 34 présentant une butée haute (non référencée) pour limiter le déplacement de la languette de commande 390 coopérant avec les dents de la roue à rochet 37. L'encombrement circonférentiel de la cassette 30 est donc réduit en sorte que le logement 20 est de plus petite taille. Le mécanisme d'embrayage est donc plus facile à équilibrer, le ou les ressorts 380, pattes 450 et encoches 440 étant répartis de manière régulière.

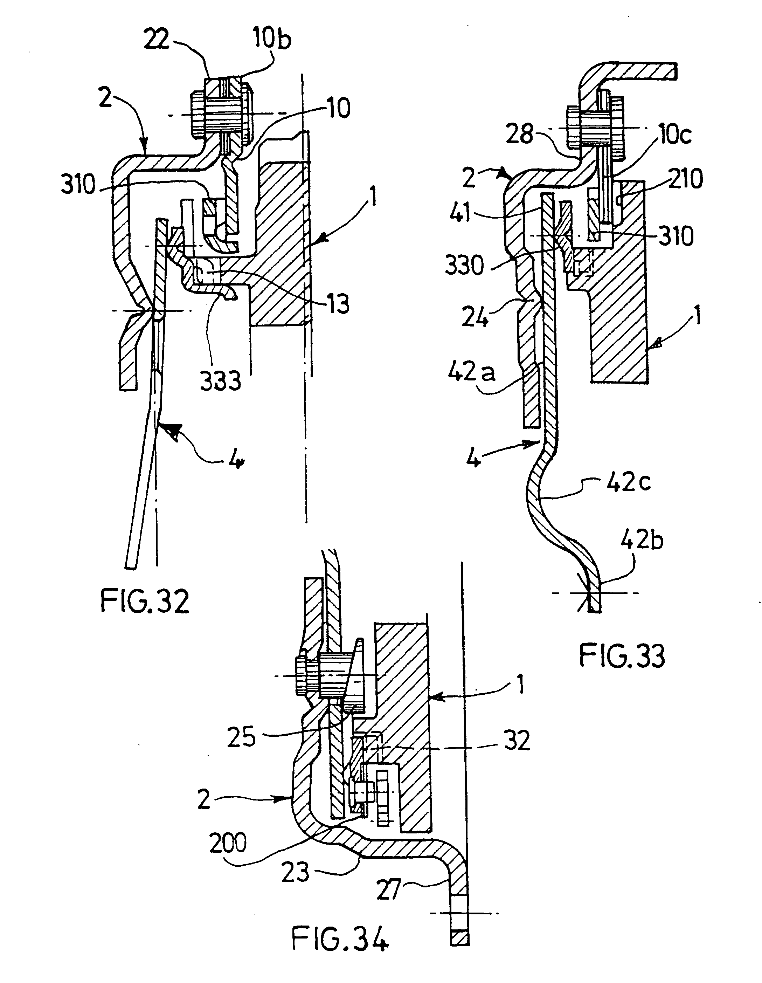

La languette de commande 390 est également simplifiée puisque le cliquet anti-retour est supprimé. On notera qu'à la figure 12, l'axe 35, la vis sans fin 36 et la roue à rochet 37 sont monoblocs. Comme décrit dans le document FR98/01453 déposé le 5 février 1998 et publiée sous le numéro FR-A-2 774 441, on voit que la cassette 30 est inclinée à la faveur de paliers (non références) présentant chacun un trou central incliné, les ailes du support 34 étant droites. Ce support est fixé uniquement par deux rivets au couvercle. Le montage de l'ensemble 35, 36, 37 avec ses paliers est réalisé en ouvrant les trous de passages réalisés dans les ailes du support 34 et en refermant les dits trous partiellement, après montage de l'ensemble précité, par sertissage au contact des paliers comme visible à la figure 31 du document FR98/01453 précité, auquel on se reportera pour plus de précisions.

En fonctionnement - mécanisme d'embrayage monté sur le volant moteur - la ou les garnitures de friction s'usent en sorte que le diaphragme agit sur l'organe élastique 39 pour faire tourner la roue à rochet la vis sans fin et la pièce intermédiaire 310 afin d'armer le ou les ressorts de rattrapage 380 qui lors d'une ou de plusieurs opérations d'engagement et de désengagement (débrayage) de l'embrayage font tourner l'anneau 380 en agissant sue les pattes 450. Bien entendu, cela se produit lorsque le ou les ressorts 380 sont suffisamment armés pour vaincre les phénomènes de frottements et lorsque la charge exercée par le diaphragme sur l'anneau a suffisamment diminuée.

Des frottements se produisent entre les bords droits de la patte 450 et de l'encoche 440.

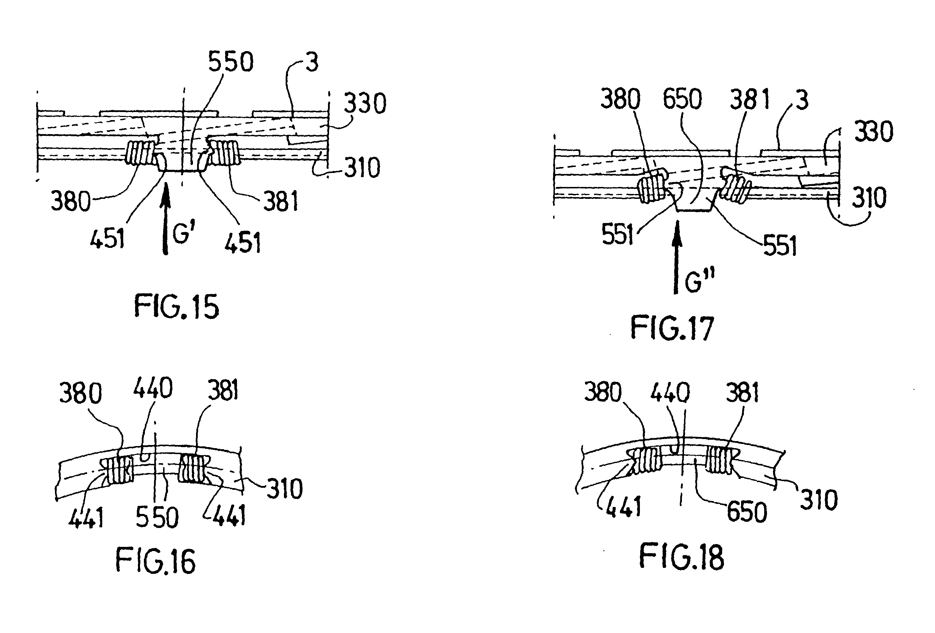

Pour diminuer ces frottements, il est proposé, dans les figures 15 et 16, de monter deux ressorts de rattrapage 380 et 381 par encoche 440. Les ressorts 380, 381 sont monté de part et d'autre d'une patte 550 d'orientation axiale, formant tenon et remplaçant la patte 450 des figures 10 à 14.

La patte 550 est donc d'un seul tenant avec l'anneau de réglage 330 à rampes. Dans ce cas, les deux bords latéraux 451 de la pattes 550 et les deux bords latéraux 441 de l'encoche 440 ont une forme pointue pour retenir intérieurement les ressorts à boudin 380, 381.

Les ressorts 380, 381 sont donc montés en opposition sous précontrainte, l'un des ressorts 380, 381 se détendant, tandis que l'autre se comprime sans apparition de jeu.

Grâce à cette disposition, on facilite le déplacement de l'anneau 330 par rapport à la pièce intermédiaire 310 et ce sans bruit et sans contact direct de la patte 550 avec les bords latéraux de l'échancrure 440. En outre, on amortit les vibrations de torsion et on réduit les frottements.

En variante, figures 17 et 18, on peut incliner les ressorts en opposition, 380 381. Dans ce cas, l'encoche 440 est identique à celle de la figure 16. La patte 650 issue de l'anneau de réglage est modifiée. Les bords latéraux 551 de cette patte ont une forme pointue pour retenir intérieurement les ressorts 380, 381 montés sous précontrainte.

Ici, les bords 551 sont inclinés en sorte que la patte 650 à une forme trapézoïdale avec des bords latéraux 551 à pointe saillante de retenue des ressorts 380, 381.

Grâce à l'inclinaison, on obtient une composante axiale sollicitant d'une part la pièce intermédiaire en direction du plateau de pression 1 et des protubérances 10a et, d'autre part, l'anneau 330 en direction du diaphragme.

Ceci peut être mis à profit pour supprimer les protubérances 10a des languettes 10 les plus proches du diaphragme 4.

La pièce intermédiaire n'a plus besoin d'être pincée, son maintien axial est réalisé grâce aux ressorts 380, 381 sollicitant axialement a pièce intermédiaire en direction opposée du fond du couvercle 2 et l'anneau 330 au contact du diaphragme 4.

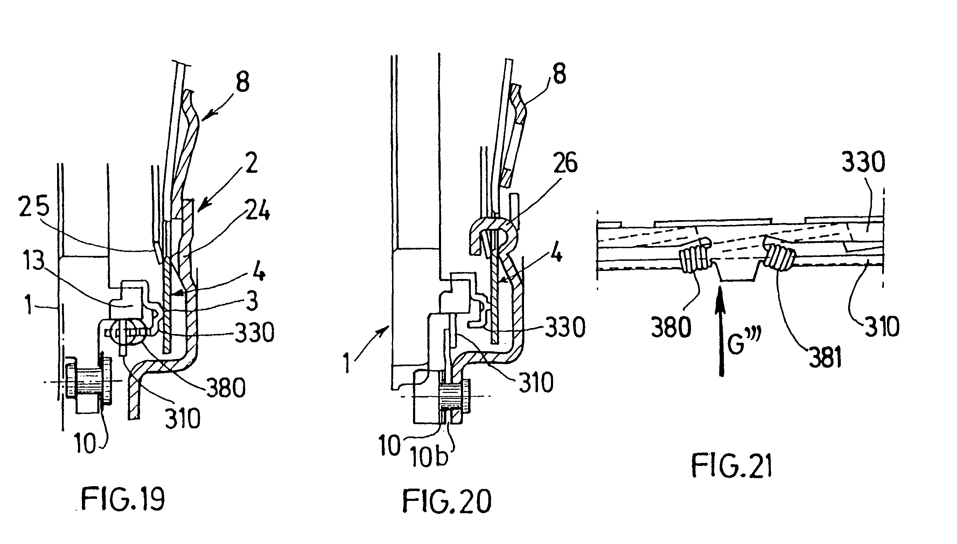

Dans ces conditions, on peut remplacer les protubérances 10a des figures précédentes par des pièces de butée 10b (figures 19 à 21) rigides et distinctes des premières languettes 10 ainsi simplifiées.

Les pièces de butée 10b sont fixées au couvercle par les mêmes rivets de fixation des premières languettes 10 au couvercle 2. Les pièces 10b sont en forme de secteur annulaire à leur périphérie interne. Ainsi qu'on l'aura compris l'épaisseur du sous ensemble anneau 330 - ressorts 380, 381 - pièce intermédiaire 310 diminue lorsque le sous ensemble est monté entre les butées 10b et le diaphragme en sorte que l'anneau est toujours en contact avec le diaphragme.

Dans les figures 15 à 21, l'anneau 330 est lié en rotation à la pièce intermédiaire 310, en forme d'anneau ou de rondelles, par une liaison élastique, à l'aide de ressorts 380, 381 autorisant un déplacement axial de l'anneau par rapport à la pièce intermédiaire.

En variante, cette liaison peut être réalisée à l'aide de secondes languettes axialement élastiques autorisant un déplacement axial de l'anneau 330 et permettant la formation d'un ensemble manipulable et transportable.

Dans une première forme de réalisation, les secondes languettes 200 ont une forme identique aux premières languettes 10. On peut donc utiliser des languettes du type standard d'un mécanisme d'embrayage de plus petite taille.

Ces languettes sont donc globalement d'orientation tangentielles et sont fixées à l'aide d'organes de fixation à l'une de leurs extrémités à l'anneau de réglage 330 à rampes 32 et à la pièce intermédiaire.

Suivant une caractéristique, la pièce intermédiaire 310 et l'anneau 330 à rampes sont issus d'un même flanc métallique.

Ainsi, en partant une tôle emboutie, celle-ci peut former l'anneau 330 à rampes 32, puis on découpe la pièce intermédiaire 310, qui ainsi entoure l'anneau 330 sans perte de matière. Ce mode de réalisation est donc simple et économique.

Il permet en outre de centrer la pièce intermédiaire 310 par rapport au couvercle.

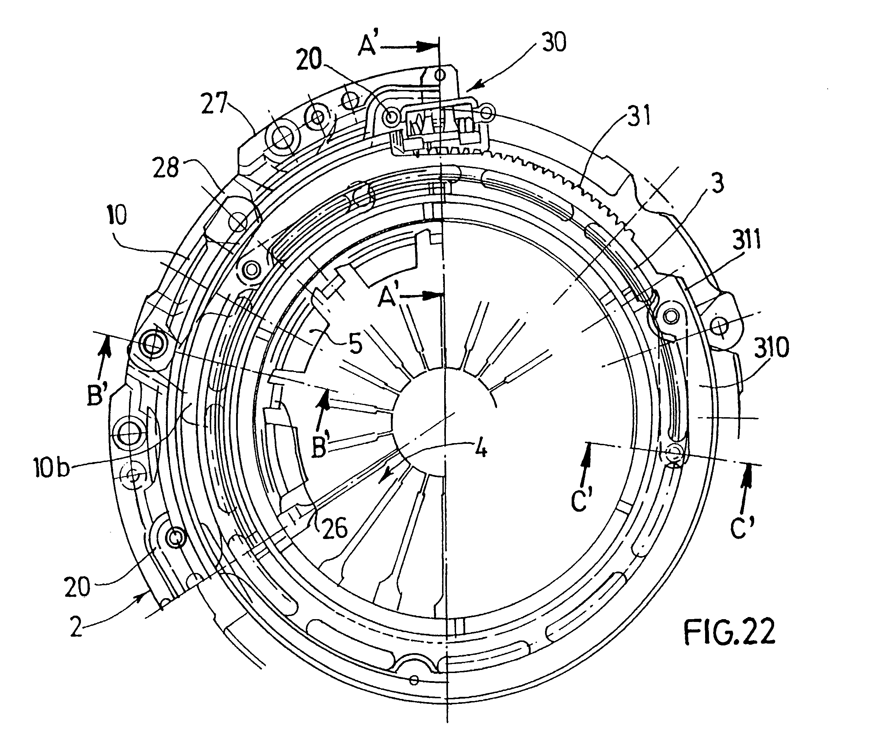

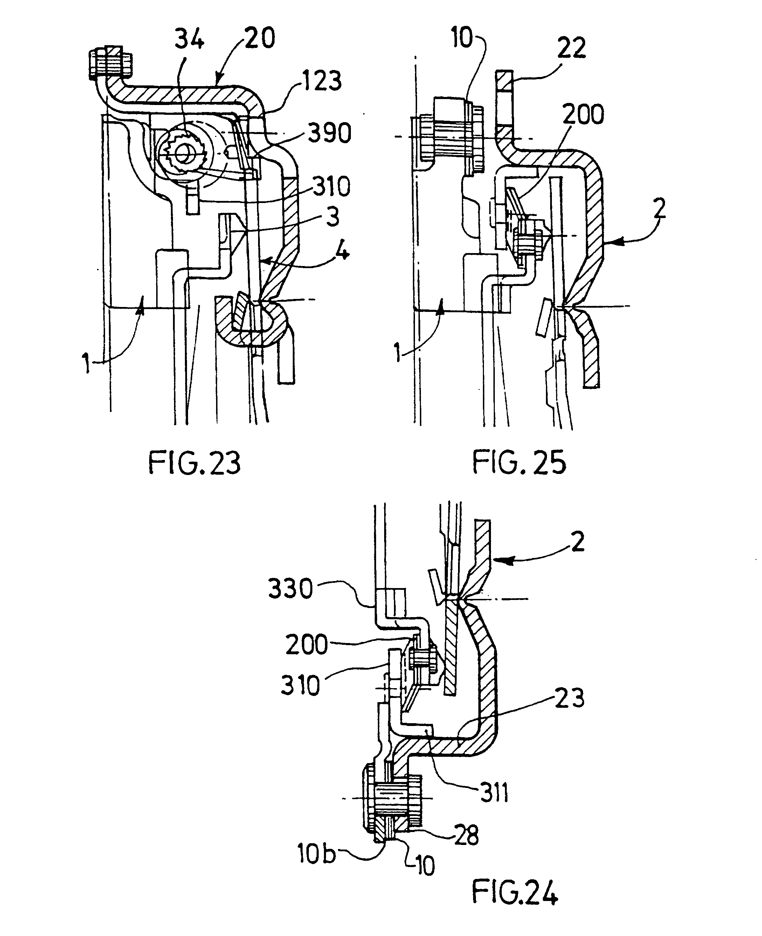

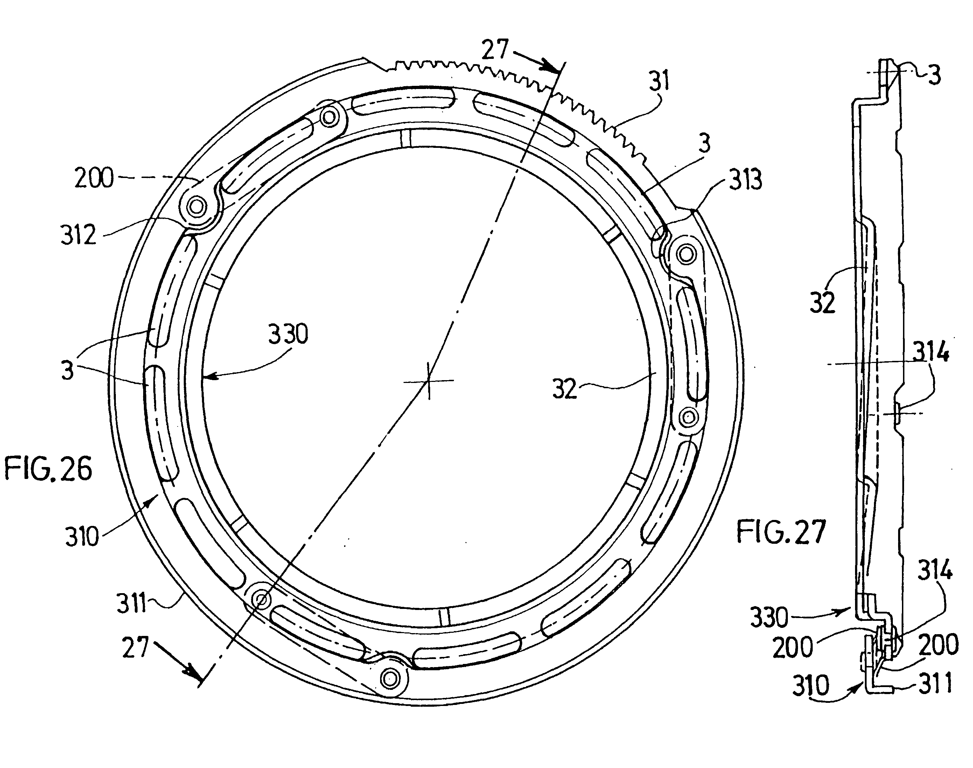

Ainsi, dans les figures 22 à 28 on voit que la pièce intermédiaire 310 est une forme d'anneau ou rondelle dotée à sa périphérie externe d'un rebord annulaire d'orientation axiale 311 interrompu par la denture 31. Ce rebord 311, éventuellement fractionné en pattes, est en contact intime à sa périphérie externe avec la périphérie interne de la jupe 23 du couvercle 2 en sorte que la pièce intermédiaire 310 est centrée à sa périphérie externe par rapport au couvercle 2.

Les languettes 200 sont ici fixée par rivetage à des oreilles 312 de la pièce intermédiaire 310 et à l'anneau 330, en sorte que le plateau de pression qui est simplifié puisqu'il n'a plus besoin d'être usiné pour formation d'une portée de centrage pour l'anneau 330. En effet, grâce aux secondes languettes 200, axialement élastiques et d'orientation tangentielle, l'anneau est centré par rapport à la pièce intermédiaire 310 entourant l'anneau 330. Bien entendu en variante les secondes languettes 200 peuvent être de forme courbe, c'est à dire en forme d'arc de cercle.

Il est formé des oreilles 312 à la périphérie interne de la pièce intermédiaire 310 en forme d'anneau. On voit un jeu autour des oreilles 312 résultant de la découpe en final de la pièce intermédiaire. L'anneau 330 présente donc des découpes 313 à sa périphérie externe pour formation du jeu autour des oreilles 312 et éviter ainsi des interférences notamment avec les rivets de fixation des languettes.

Grâce aux moyens d'appui 3 fragmentés, les têtes des rivets de fixation 314, implantées entre deux secteurs annulaires en forme de bossages des moyens d'appui 3 ne s'étendent pas en saillie axiale par rapport à l'anneau 330 et donc ne viennent pas en contact avec le diaphragme.

A la figure 22 on voit une pièce rigide de butée 10b identique à celle de la figure 20, sauf qu'à la figure 22, la pièce 10b formant butée n'est pas en contact avec le couvercle mais avec la tête du rivet de fixation du jeu de languettes 10 au rebord 22 du couvercle.

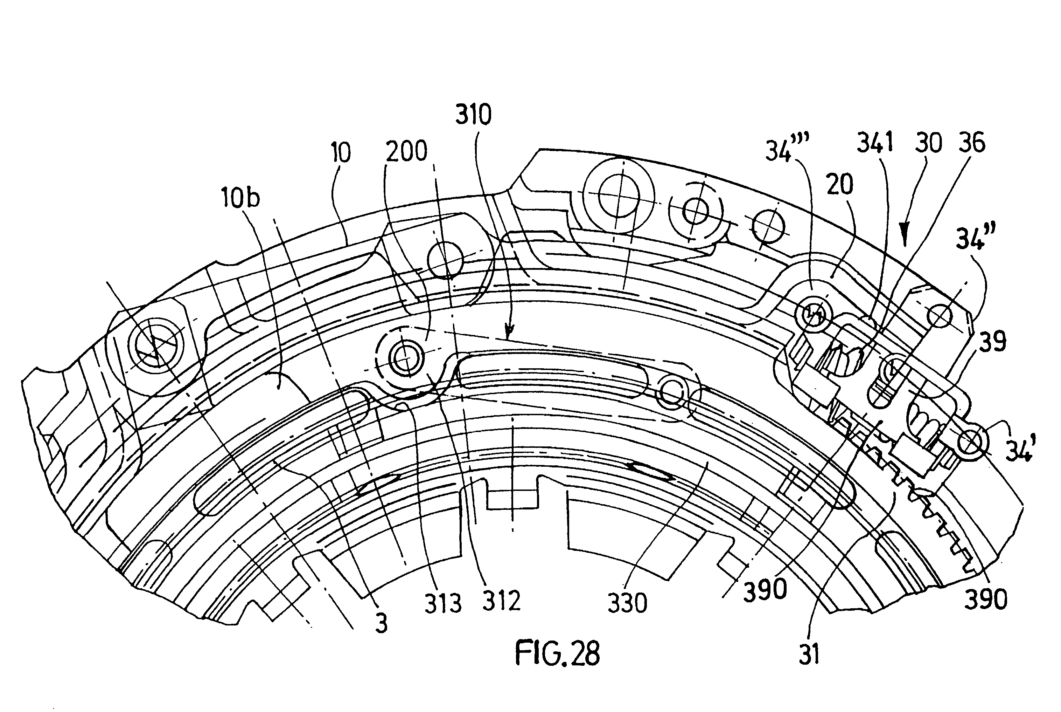

Dans les deux figures, la pièce 10b comporte une partie périphérique en forme de patte inclinée, relié par un pli à une partie centrale en forme de sabot, c'est à dire en forme de secteur annulaire pour contact avec la partie annulaire de la pièce intermédiaire 310. La partie périphérique est ainsi décalée axialement par rapport à la partie centrale à la faveur du pli parallèle au jeu de premières languettes grâce à l'inclinaison de la patte. La partie centrale de la pièce 10b s'étend sans le jeu de languettes 10 et grâce au pli, la pièce 10b est bloquée en rotation par les languettes 10 (figure 28).

Les secondes languettes 200 sont fixées à la pièce intermédiaire globalement radialement en dessous de la fixation des premières languettes 10 au plateau de pression 1.

Le nombre de premières et de secondes languettes 10 dépend des applications. Ici, les secondes languettes 200 sont implantées radialement au-dessous des premières languettes et alternent circonférentiellement avec la partie centrale des pièces 10b. Entre deux logements 20, on trouve donc un jeu de premières languettes 10 et radialement en dessous la partie centrale de la butée 10b et un jeu de secondes languettes 200.

Pour avoir un contact tangent entre la vis sans fin 36 et la denture 31 on incline l'axe de la vis comme décrit dans le document FR98/01453 précité.

Dans ce document, il se pose encore un problème car la vis n'est pas tangente par rapport à la denture 31 ce qui est souhaitable point de vue rendement.

Pour ce faire, le support 34 de la cassette 30 porte un bossage 341 propre à coopérer avec le contour du logement 20.

Le bossage 341 est formé, au droit de la vis 36, dans l'âme centrale du support 34 à section en forme de U.

Le bossage 341 coopère avec la périphérie interne du sommet, d'orientation axiale, du logement 20 globalement à section en forme de U. Bien entendu, on peut inverser les structures, le bossage étant formé sur le sommet, constituant l'âme centrale du logement 20.

Il en résulte que par rapport au mode de réalisation de la figure 1, les deux pattes de fixation 34", 34', disposées de part et d'autre de la patte centrale de fixation 34", comme visible à la figure 28, ont des centres non alignés. Plus précisément on utilise les trous de fixation, pour le passage des rivets de fixation des pattes de fixation, d'un couvercle normal de la figure 1 et grâce au bossage 341 on incline la cassette 30 pour rendre la vis tangente à la denture. En variante on crée de nouveau trous pour un contact tangent de la vis avec la denture.

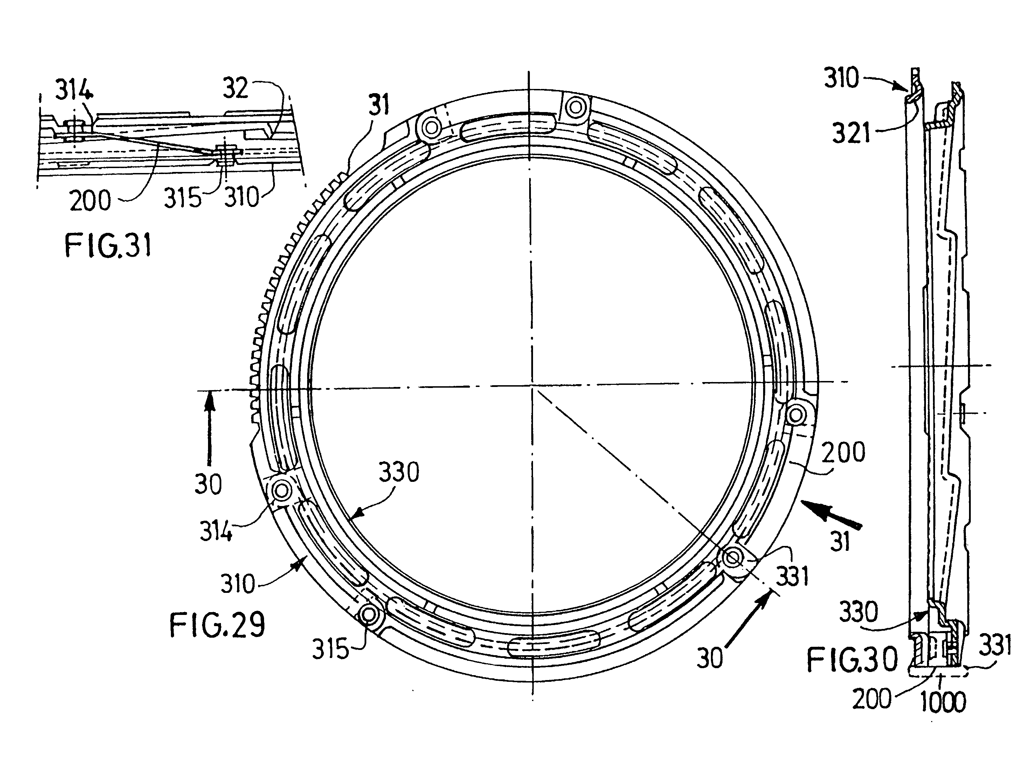

La fixation du support 34 est réalisée ici par rivetage des pattes 34, 34', 34" sur le couvercle. Bien entendu, la pièce intermédiaire 310 peut ne pas entourer l'anneau 330 (figure 29 à 32) et s'étendre radialement en dessous de la périphérie externe de l'anneau 330.

Les secondes languettes 200 interviennent, comme dans les figures 22 à 28, entre l'anneau 330 et la pièce 310 pour lier en rotation l'anneau 330 à la pièce 310 avec possibilité de mouvement axial.

Les languettes 200 sont fixées à l'une de leurs extrémités, ici par des rivets 315, à la pièce 310 et à leur autre extrémité, ici par des rivets 314, à l'anneau 330.

Plus précisément, les secondes languettes 200 ont une forme courbe, en forme d'arc de cercle, en étant axialement élastiques et sont fixées à l'aide des rivets 314 sur une pattes 331 de l'anneau 330.

Les pattes 331 s'étendent entre deux secteurs des moyens d'appui 3 en faisant saillie radialement vers l'extérieur par rapport à ceux-ci.

Axialement, les pattes 331 sont décalés axialement vers la pièce 310 et le plateau 1 par rapport aux moyens d'appui 3, comme dans les figures 22 à 28, afin que les têtes des rivets 314 n'interfèrent pas avec le diaphragme.

La pièce 310 est emboutie localement au niveau des rivets 315 (figure 31) pour que les dits rivets 315 ne s'étendent pas en saillie axiale par rapport à la face de la pièce 310 tournée vers le plateau 1.

La pièce 310 est donc emboutie localement axialement en direction de l'anneau 330 pour la fixation des rivets 315.

Dans tous les cas, la pièce 310 présente un dégagement au niveau de la denture 31 ainsi qu'un rebord annulaire d'orientation axiale s'étendant à l'une de ses périphéries externe et interne. Dans les figures 22 à 28, le dit rebord 311 s'étend à la périphérie externe de la pièce 310 pour centrage de celle-ci par rapport à la jupe 23 du couvercle.

Dans les figures 29 à 32, le rebord 321 s'étend à la périphérie interne de la pièce 310. Le rebord 311, 321 rigidifie la pièce intermédiaire.

Dans les figures 29 à 32, l'anneau 330 présente, comme dans les figures 1 à 9, un rebord annulaire 333 à sa périphérie interne. Ce rebord 333 est d'orientation axiale et coopère par sa périphérie externe avec la périphérie interne de la surépaisseur du plateau de pression portant les plots 13 formant contre rampes.

Dans les figures 22 à 28, l'anneau 330 est dépourvu d'un tel rebord car il est centré par l'intermédiaire du rebord 311 de la pièce intermédiaire. Dans les figures 22 à 32, la pièce intermédiaire 310 est décalée axialement par rapport à l'anneau 330 et ce, en direction du plateau de pression 1.

Bien entendu, les butées 10b peuvent être réunies ensemble pour former un anneau et le ressort de rattrapage peut être intégré aux secondes languettes.

A la lumière des figures 31 et 32, on voit que la pièce intermédiaire 310 en forme d'anneau est rigidifiée circonférentiellement par les nervures 316 s'étendant chacune entre deux rivets de fixation consécutifs 315. On notera que les rivets 314 sont implantés entre deux bossages consécutifs des moyens d'appui 3 et que les sommets des rampes 32 sont implantés radialement en dessous de bossages, au milieu de ceux-ci pour rigidifier l'anneau soumis à l'action du diaphragme.

Il peut être souhaitable de réduire l'encombrement axial du mécanisme d'embrayage. Il peut être souhaitable également de simplifier la pièce intermédiaire 310 et l'anneau 330 à rampes. Il peut être enfin souhaitable de réduire l'encombrement axial du plateau de pression 1.

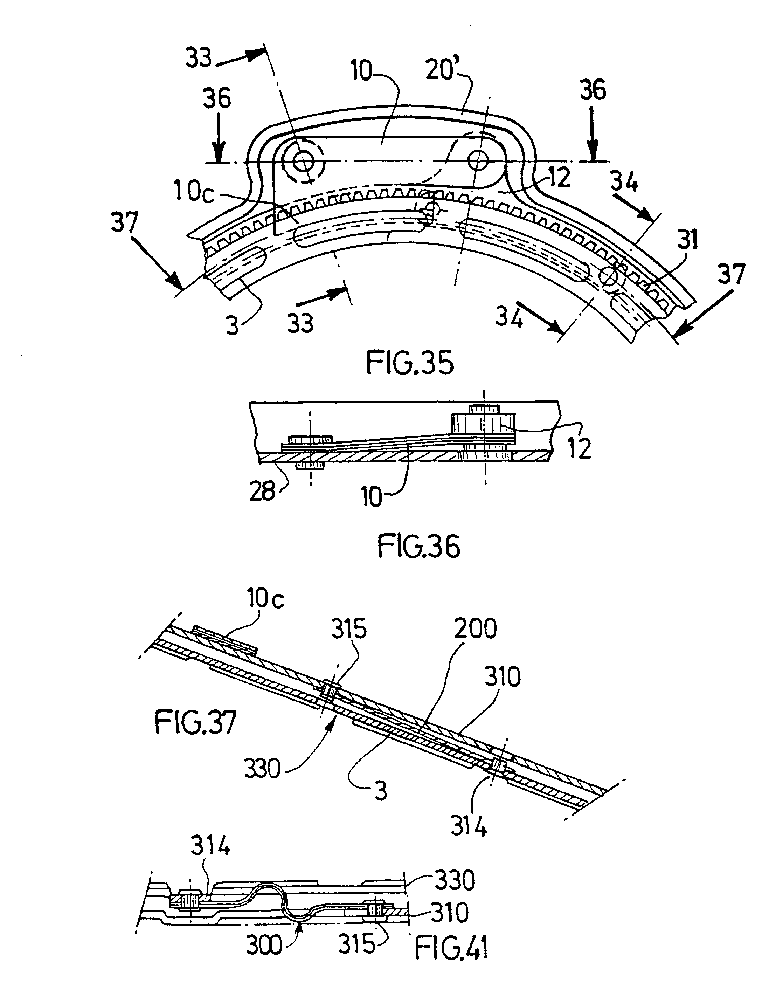

Pour ce faire, dans les figures 33 à 37, le diaphragme 4 est conformé de manière à ce que sa périphérie interne soit décalée axialement en direction du plateau de pression par rapport à sa périphérie externe.

Ainsi, les doigts 42 du diaphragme présentent une périphérie externe 42a dans le plan de la rondelle Belleville 41 du diaphragme et une périphérie interne 42b décalée axialement en direction du plateau de pression 1 par rapport à la périphérie externe 42b. Une portion de raccordement sinueuse 43b relie entre elles les périphéries 42a, 42b. Grâce à cette disposition, on réduit l'encombrement axial entre le moteur et la boîte de vitesses car la périphérie interne 42b des doigts pénètre dans le plateau de pression 1 lors de la manoeuvre de l'embrayage pour désengager celui-ci.

L'anneau de réglage 330 est simplifié car il est dépourvu de rebord à sa périphérie externe et interne. L'anneau 330 présente centralement une forme pointue fragmentée pour formation des moyens d'appui, en forme de bossage annulaire, pour le diaphragme.

L'anneau 330 est relié par des secondes languettes 200 à la pièce intermédiaire 310 de forme plane et donc de forme simplifiée.

La butée de retenue axiale de la pièce 310 est constituée par des prolongements radiaux 10c des extrémités des premières languettes 10 aux plages 28 du couvercle. Les bords latéraux de ces plages 28 sont reliés entre eux par un pont 20' s'étendant au-dessus des languettes 10en sorte que le couvercle est rigidifié.

Grâce aux prolongements 10c, on supprime les pièces de butées 10b des figures 22 à 32 ce qui permet de réduire l'encombrement axial du mécanisme d'embrayage, ainsi que le nombre de pièces.

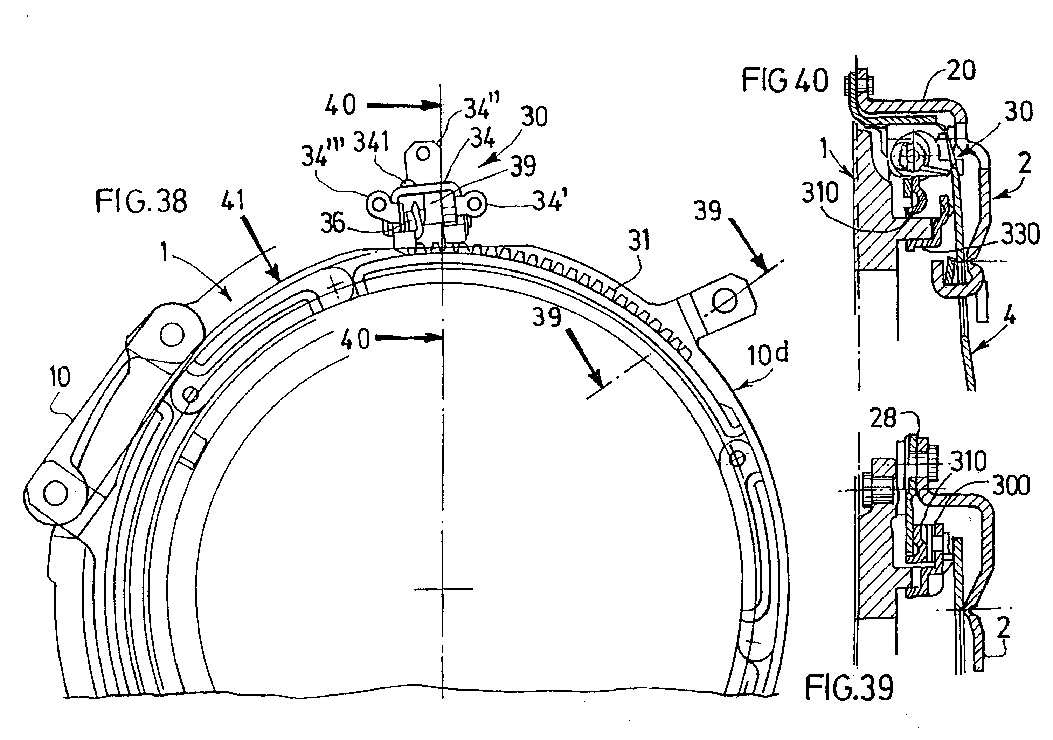

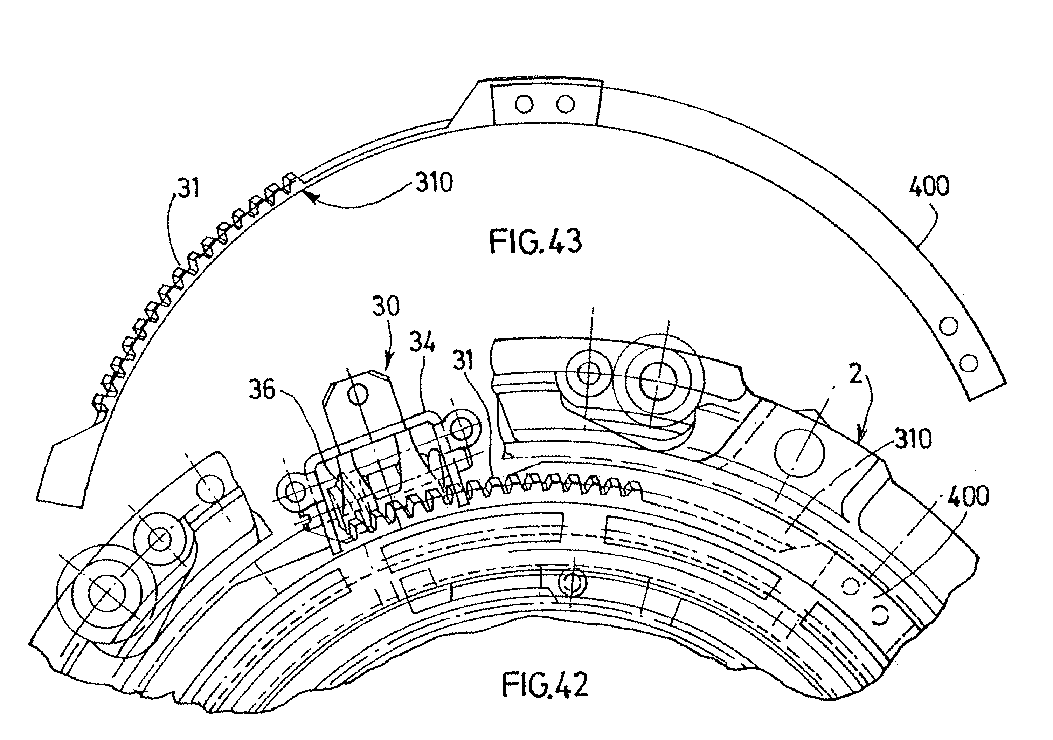

Pour réduire encore l'encombrement axial, on entaille en 210 le plateau de pression 1, au niveau de sa face dorsale afin que les prolongements 10c pénètrent sans interférence dans les entailles 210.Dans les figures 38 à 41 on incline la cassette 30 pour que la vis sans fin soit tangente à la denture 31 comme dans le mode de réalisation des figures 22 à 28. Ainsi les pattes de fixation 34'', 34' disposées de part et d'autre de la patte centrale 34'' ont des centres non alignés. La pièce intermédiaire 310 et l'anneau à rampes 300 ont une configuration du type de la figure 29 avec des rebords de rigidification 321, 333. Dans ce mode de réalisation des figures 38 à 41 on tire partie des secondes languettes. Ces secondes languettes 300 ont une fonction supplémentaire. Plus précisément au moins un jeu de secondes languettes 300 est circonférentiellement élastique. Ce jeu, ici de deux languettes superposées (figure 41), remplace le ressort de rattrapage en sorte que la cassette 30 est simplifiée car elle est dépourvue d'un tel ressort.

La cassette 30 est donc moins encombrante, comme mieux visible à la figure 38, en sorte qu'elle est plus économique notamment du fait que son support requiert moins de matière.

Ici tous les jeux de languettes 300 sont circonférentiellement élastique et bien entendu axialement élastique. Pour ce faire les secondes languettes 300 présentent au moins un pli ici en forme d'ondulation. Ici les languettes 300 sont pliées à la manière d'accordéon, le nombre de plis dépendant des applications et de l'élasticité circonférentielle recherchée.

Dans ce mode de réalisation les languettes 300 présentent deux ondulations d'amplitudes différentes (figure 38).

On réduit ainsi le nombre de pièces du fait de la suppression du ressort de rattrapage dans la cassette 30. En outre on diminue les risques de coincement du fait que plusieurs jeux de secondes languettes 300 sont prévus en sorte que l'anneau 330 peut tourner lors d'une opération de rattrapage d'usure de manière sûre. Pour diminuer encore le nombre de pièces, on réunit ensemble les pièces de butée pour former un anneau de butée 10d avec des pattes de fixation aux plages 28. Cet anneau 10d sert d'appui à la pièce intermédiaire 310 et remplace les secteurs 10b. Comme visible à la figure 38 le support de la cassette 30 comporte deux butées hautes pour limiter le mouvement de l'organe élastique 39, s'étendant en dessous de l'âme centrale du support 34 en forme de U. Les butées hautes sont réalisées par des plis à 90° s'étendant dans la partie basse des ailes latérales du support, ces butées étant voisines du fond du couvercle.

L'organe élastique 39 s'étend en dessous de l'âme centrale du support en étant en contact avec la face inférieure de la dite âme.

Dans les figures précédentes la pièce intermédiaire a une forme annulaire mais bien entendu la pièce intermédiaire 310 peut se réduire à un secteur denté 31 relié par une seconde languette élastique à l'anneau à rampes. Un tel équipage seconde languette 400 - secteur denté 310 est visible dans les figures 42 et 43.

Cette disposition améliore l'engrènement vis sans fin 30 - denture 31 à haute vitesse de rotation car le secteur 310 est relié élastiquement par la languette 400 de forme courbe (en forme de secteur annulaire) au couvercle.

Cette disposition peut bloquer le rattrapage d'usure aux très hautes vitesses de rotation pour notamment éliminer les sur-rattrapages liés aux vibrations aux très hautes vitesses de rotation. Dans ces figures la pièce intermédiaire est suspendue élastiquement par l'intermédiaire de la seconde languette.

Dans les figures précédentes un seul logement 20 était utilisé pour le montage de la cassette 30.

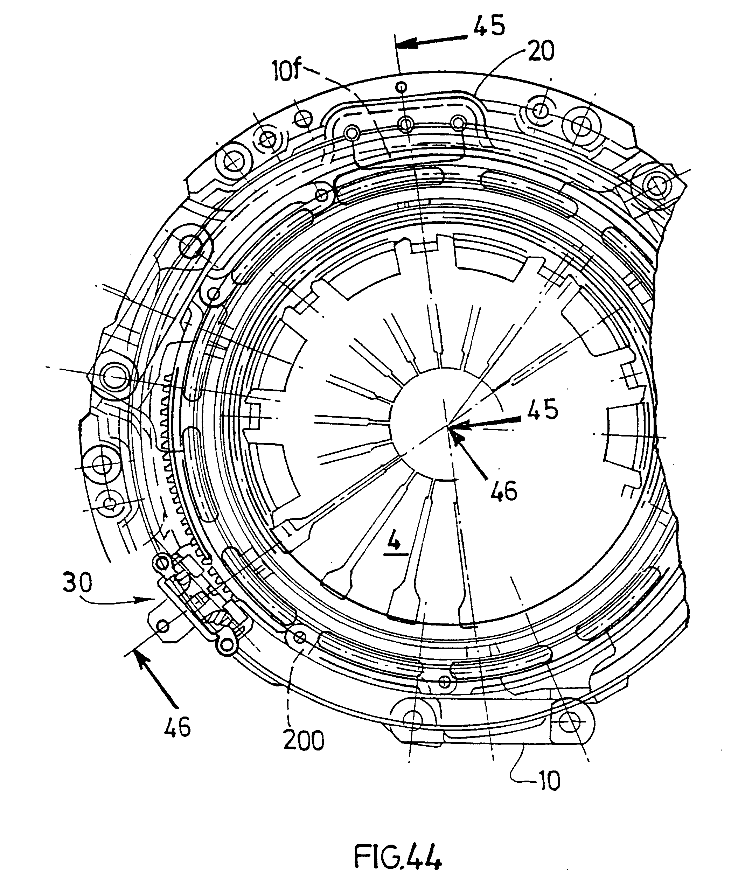

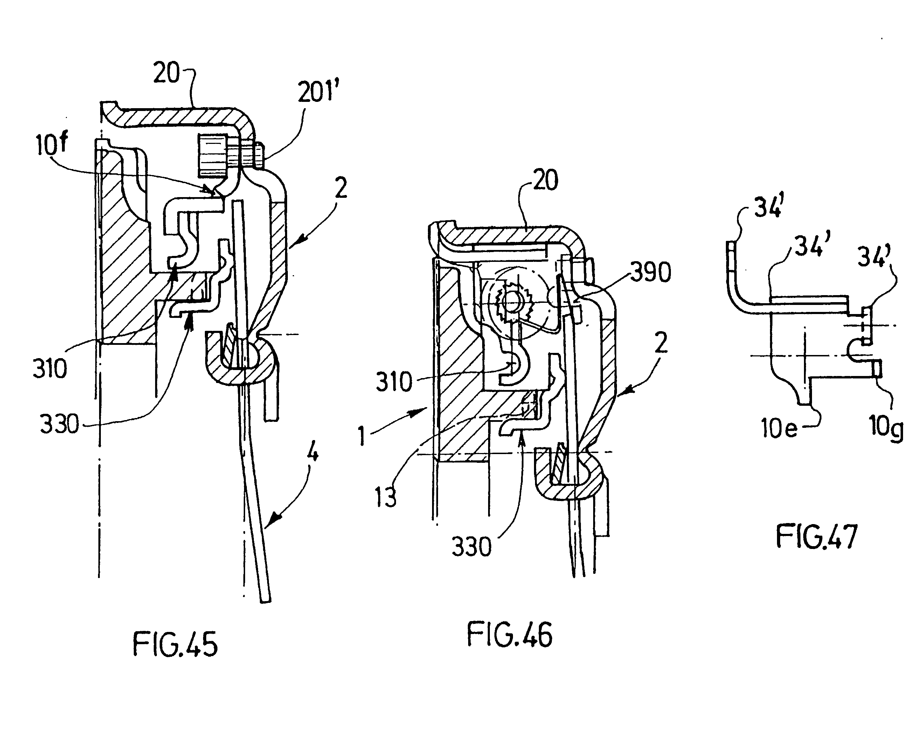

Dans les figures 44 à 47 on utilise les deux autres logements pour le montage de pièces 10f formant butée axiale pour la pièce intermédiaire 310. La pièce 10f centre la pièce intermédiaire 310 qui est pour ce faire en contact intime par sa périphérie externe avec la périphérie interne d'une portion d'orientation axiale que comporte chaque pièce 10f en forme de crochet pour retenir axialement la pièce intermédiaire.

Les pièces 10f présentent donc une portion d'orientation radiale de butée dirigée radialement vers l'intérieur pour contact avec la face de la pièce intermédiaire 310 dirigée à l'opposé du fond du couvercle.

Les pièces de butée 10f sont donc en forme d'équerre. Ici chaque pièce 10f présente une patte de fixation se raccordant à l'extrémité libre de la portion axiale de la pièce 10f. La patte de fixation s'étend globalement radialement vers l'extérieur et est fixée au fond 123 du logement 20 par au moins un rivet, qui est ici un rivet, qui est ici un rivet d'équilibrage 201'. Les logements 20 sont ici tous identiques en sorte que les fonds 123 sont dotés d'une fenêtre. Les pièces 10f forment également des masses d'équilibrage. Les ailes latérales du support 34 présentent chacune une patte 10^{e} dirigée radialement vers l'intérieur pour servir de butée axiale à la pièce intermédiaire en association avec les pièces 10f. Le support 34 a donc une fonction supplémentaire et ce de manière simple et économique. Dans ce mode de réalisation on utilise les logements pour le montage des butées 10f, 10^{e} axiales de maintient de la pièce intermédiaire 310. On a repéré en 10g l'une des butées hautes sachant que le support de la figure 42 est identique à celui des figures 44 à 47.

Dans tous les cas la pièce intermédiaire est en contact de frottement avec au moins une butée axiale 10a, 10b, 10d, 10f, 10^{e} retenant axialement la pièce intermédiaire dans un sens à savoir dans le sens allant du fond du couvercle 2 au plateau de pression 1, la pièce intermédiaire 310 étant en contact avec la face de ladite butée tournée vers le fond du couvercle.

Dans l'autre sens axial la pièce intermédiaire est soit retenue par un prolongement 10a (figure 9), soit par le diaphragme via l'anneau 3 et les secondes languettes.

Dans toutes les figures l'organe élastique est implanté radialement en-dessous de l'âme centrale du support 34 en forme de U.

En variante l'organe élastique 39 est implanté radialement au-dessus du support 34 en étant en contact avec la face supérieure de l'âme centrale 134 du support 34, ce qui permet d'allonger la languette de commande 390 de l'organe élastique 39. Un jeu radial existe entre le logement 20 et l'organe 39 fixé par rivetage à l'âme centrale 134 du support 34.

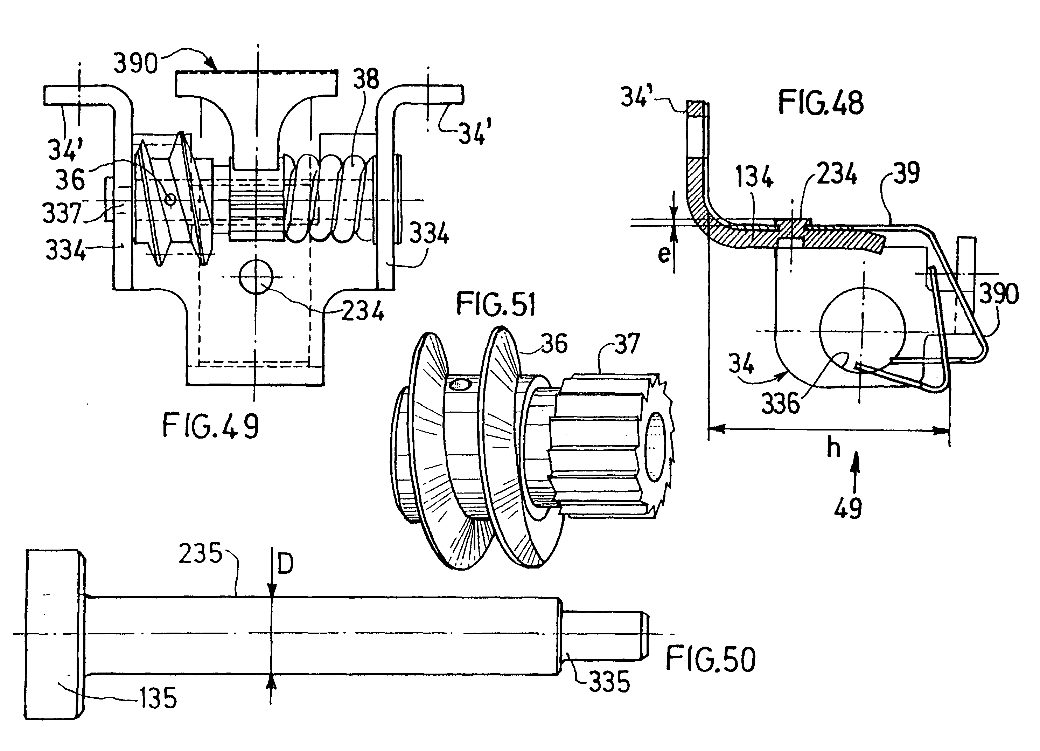

Plus précisément le jeu radial existe entre la déformation de la jupe du couvercle formant le sommet du logement (voir figure 3) de la cassette 30 et le rivet 234 de fixation de l'organe 39 est issu par extrusion de l'âme 134 en sorte qu'il s'étend en saillie par rapport à l'organe 39 sur une faible hauteur e (figure 48), ce qui est avantageux pour la réduction de l'encombrement.

Sur cette figure 48 on voit que l'on maîtrise bien la distance h lorsque l'embrayage est engagé. L'organe élastique est donc fixé en deux points à savoir au niveau de la patte centrale 34' et fixation du support 34 et au niveau du rivet 234.

L'axe 35 est doté dans le mode de réalisation des figures 48 à 51 d'une tête cylindrique 135, d'un fût 235 de diamètre D inférieur à celui de la tête 135 et d'une queue d'extrémité 335 de diamètre inférieur à celui du fût 235. L'ensemble vis sans fin 36 - roue à rochet 37 est monté coulissant le long du fût 235 s'étendant axialement entre les deux ailes 334 du support 34. Le ressort de rattrapage 38 est monté autour du fût 235 et s'appuie sur la tête 135 traversant pour ce faire un trou 336 de l'aile concernée 334. L'axe 35 est bloqué axialement sur l'autre aile 334 grâce à sa queue 335 en appui par son épaulement, formé à la faveur du changement de diamètre du raccordement de la queue 335 avec le fût 235, sur la face interne de l'aile 334 et par l'extrémité de la queue 335, qui est écrasé après traversée de la queue 335 d'une ouverture 337 réalisée dans ladite aile. Bien entendu le diamètre de l'ouverture 337 est inférieur à celui de l'ouverture 336.

Le ressort de rattrapage 38 est taré c'est à dire précontraint en conséquence pour maintenir la vis 337 en appui sur l'aile 334 adjacente. Ainsi dans ce mode de réalisation l'ensemble roue 37 - vis 36 est enfilé sur le fût 235 et le ressort 38 ne s'appuie plus sur l'aile adjacente 334 en sorte que ladite aile n'a pas besoin d'être traitée. En outre l'organe élastique 39 est simplifié et a une plus grande longueur. Pour plus de précisions sur la précontrainte du ressort de rattrapage 38, on se reportera au document FR 98 16456 déposé le 29.12.1998. Cette précontrainte permet d'avoir un mouvement relatif entre la vis 36 et la denture 31 uniquement lors d'une opération de rattrapage d'usure ce qui permet de diminuer les usures. Lorsque la languette de commande 390 a sauté une dent de la roue à rochet 37, on fait tourner l'ensemble roue à rochet 37 - vis sans fin 36 uniquement lors de l'opération de réembrayage ou de réengagement de l'embrayage. Durant cette phase le ressort 38 reste sous précontrainte celle-ci étant telle que le ressort 38 n'est globalement pas comprimé. Lors d'une opération de désengagement de l'embrayage la vis 36 ne peut pas tourner à cause du ressort 38.

Bien entendu toutes les combinaisons sont possibles.

On notera que le plateau de pression présente un méplat de dégagement au niveau de la cassette 30, comme visible par exemple à la figure 42, et que la denture 31 est implantée dans le fond d'un évidemment ou échancrure de la pièce intermédiaire 310 en sorte que la denture s'étend radialement en dessous de la périphérie externe de la pièce intermédiaire. Toute ceci est réalisé pour que la vis sans fin 36 vienne en prise de manière sûre avec la denture 31 tout en réduisant l'encombrement transversal.

A la figure 30 il est possible de protéger les secondes languettes 200 lorsque le sous ensemble pièce intermédiaire 310 - languettes 200 - anneau à rampes 330 n'est pas encore monté au sein de l'embrayage. Pour ce faire il suffit de monter des cavaliers amovibles 1000 sur l'anneau 330 et la pièce intermédiaire 310.

On notera que les pièces d'équilibrage 10f de la figure 44 sont fixées par trois rivets 201' au fond 123 du logement 20. Les pièces 10b en variante sont reliées ensembles à leur périphérie interne pour former un anneau prolongé à sa périphérie externe par des pattes de fixation au couvercle. Dans ce cas les extrémités des languettes, destinées à être fixées au couvercle, sont intercalées entre les pattes de l'anneau 10b et le couvercle, ici des plages de celui-ci. Toutes les combinaisons sont possibles ainsi à la figure 9 l'une au moins des protubérances 10a peut être remplacée par une pièce rigide 10b du type de celle de la figure 22.

Dans le mode de réalisation des figures 48 à 51 on peut prévoir un bossage du type du bossage 341 de la figure 38. A la figure 38 et dans ces figures 48 à 52 on peut prévoir, de l'autre côté de la patte 34'', un second bossage sur l'âme centrale du support. Ce second bossage représenté en 341' à la figure 52 peut être moins haut que le bossage 341. Ainsi sous l'effet de la force centrifuge ce second bossage est admis à venir en contact avec la périphérie interne du sommet du logement 20. Les bossages 341, 341' sont avantageusement obtenus par emboutissage. La cassette des figures 48 à 52 est donc particulièrement économique.

En variante au lieu d'avoir des pattes 34' et 34'' différentes comme à la figure 40, il suffit d'incliner le fond 123 du logement afin que la vis sans fin soit tangente à la denture 31 formant crémaillère, tout en ayant une cassette 30 avec des pattes comme à la figure 8.

La butée haute ou butée de contrôle de la languette 390 peut venir du couvercle 2 comme décrit dans le document FR 98 165 47 déposé le 29-12-98.

Grâce aux secondes languettes il est formé avec la pièce intermédiaire et l'anneau à rampes un sous ensemble monté sous précontrainte entre le diaphragme et la ou les butées.

Grâce à la précontrainte des languettes l'épaisseur de ce sous ensemble diminue lorsqu'il est monté entre le diaphragme et la ou les butées. L'anneau est toujours en appui sur le diaphragme.

## Revendications

1. Mécanisme d'embrayage, notamment pour véhicule automobile, comportant un couvercle (2) doté d'un fond (21) d'orientation transversale, troué centralement, un plateau de pression (1) présentant frontalement une face de friction (11)pour coopération avec un disque de friction (101) doté d'au moins une garniture de friction et portant dorsalement des moyens d'appui (3), des moyens (10) pour lier en rotation le plateau de pression (1) au couvercle (2) tout en autorisant un mouvement axial du plateau de pression (1) par rapport au couvercle (2), des moyens embrayeurs (41) prenant appui sur le couvercle (2) pour action sur les moyens d'appui (3), des leviers de débrayage (42) montés de manière pivotante sur le couvercle (2) pour action sur les moyens embrayeurs, et un dispositif de rattrapage d'usure de la ou des garnitures du disque de friction (101), dans lequel le dispositif de rattrapage d'usure comporte un actionneur (410) solidaire des moyens embrayeurs (41), et destiné à entraîner une vis sans fin (36) portée par le couvercle (2), ladite vis sans fin (36) coopérant avec une denture (31) associé à un anneau (330) à rampes (32)coopérant avec des contre-rampes (13) portées par le plateau de pression (1),
**caractérisé en ce que** la denture (31) appartient à une pièce intermédiaire (310) liée en rotation à l'anneau (330) à rampes (32) par l'intermédiaire d'une liaison (340, 350) autorisant un déplacement axial de l'anneau (330) à rampes (32) par rapport à la pièce intermédiaire (310).

2. Mécanisme selon la revendication 1, **caractérisé en ce que** la pièce intermédiaire (310) est agencée dans le couvercle (2) de manière globalement axialement fixe.

3. Mécanisme selon la revendication 1, **caractérisé en ce que** au moins une pièce de butée (10a, 10b, 10c, 10^{e}, 10f) est portée par le couvercle (2) pour contact avec la pièce intermédiaire (310) et maintien axial de celle-ci dans le sens axial allant du couvercle (2) au plateau de pression.

4. Mécanisme selon la revendication 3, **caractérisé en ce que** plusieurs pièces de butée (10a, 10b, 10c, 10^{e}, 10f) sont prévues.

5. Mécanisme selon la revendication 4, **caractérisé en ce que** les pièces des butées (10a, 10b, 10c) sont en forme de secteur annulaire à leur périphérie interne.

6. Mécanisme selon la revendication 4 **caractérisé en ce que** les pièces des butées (10a, 10b, 10c, 10^{e}) sont fixées à l'aide chacune d'au moins une patte de fixation au couvercle.

7. Mécanisme selon la revendication 6 **caractérisé en ce que** l'une au moins des pièces de fixation (10^{c}, 10f) est montée dans un logement (20) formé en surépaisseur à la périphérie externe du couvercle (2).

8. Mécanisme selon la revendication 7 **caractérisé en ce que** la pièce de butée (10f) est une pièce d'équilibrage.

9. Mécanisme selon la revendication 8 **caractérisé en ce que** la pièce d'équilibrage est en forme d'équerre comportant une portion d'orientation radiale dirigée radialement vers l'intérieur formant butée pour la pièce intermédiaire (310) ladite portion radiale étant prolongée par une portion d'orientation axiale à l'extrémité libre de laquelle se raccorde la patte de fixation au couvercle dirigée radialement vers l'extérieur.

10. Mécanisme selon la revendication 8 **caractérisé en ce que** la pièce de butée (10f) appartient à un support (34) portant la vis sans fin (36), **en ce que** le support (34) a une forme en U avec deux ailes latérales et **en ce que** l'une au moins des ailes présente une patte (10f) dirigée radialement vers l'intérieur pour former une butée axiale pour la pièce intermédiaire.

11. Mécanisme selon la revendication 1, **caractérisé en ce que** la pièce intermédiaire (310) est pincée axialement entre deux protubérances (10a) solidaires du couvercle (2).

12. Mécanisme selon la revendication 11, **caractérisé en ce que** les protubérances (10a) appartiennent à des premières languettes axialement élastiques (10) liant en rotation le plateau de pression (1) au couvercle (2) avec mobilité axiale.

13. Mécanisme selon la revendication 12, **caractérisé en ce que** les premières languettes (10) sont d'orientation tangentielle en étant fixée à leur première extrémité au couvercle (2) et **en ce que** les protubérances (10a) prolongent la première extrémité des languettes (10).

14. Mécanisme selon la revendication 3, **caractérisé en ce que** la pièce de butée consiste en un anneau présentant des pattes pour sa fixation au couvercle.

15. Mécanisme selon la revendication 1 , **caractérisé en ce que** l'anneau (330) à rampes (32) est lié en rotation par coopération de formes avec la pièce intermédiaire (310).

16. Mécanisme selon la revendication 1 **caractérisé en ce que** l'un des éléments anneau (330) à rampes (32) - pièce intermédiaire (310) présente des pattes (350) pénétrant dans des échancrures (340) de l'autre des éléments pièce intermédiaire (310) - anneau (330) à rampes (32).

17. Mécanisme selon la revendication 16, **caractérisé en ce que** l'anneau (330) présente des pattes (350) d'orientation axiale traversant des échancrures (340) de la pièce intermédiaire.

18. Mécanisme selon la revendication 17, **caractérisé en ce que** les pattes (350) traversent à jeu circonférentiel de montage les échancrures (340).

19. Mécanisme selon la revendication 17, **caractérisé en ce que** les pattes (450, 550, 650) ont une largeur circonférentielle inférieure à celle des échancrures (440).

20. Mécanisme selon la revendication 19, **caractérisé en ce que** un ressort de rattrapage (380) prend appui à l'une de ses extrémités sur un premier bord latéral (441) d'une échancrure (340) et à l'autre de ses extrémités sur un premier bord latéral (551) de la patte (450, 550, 650) de l'anneau (330) à rampes (32).

21. Mécanisme selon la revendication 20, **caractérisé en ce que** le ressort de rattrapage (380) sollicite le deuxième bord latéral de la patte (450) en contact avec le deuxième bord latéral de l'échancrure (440).

22. Mécanisme selon la revendication 20, **caractérisé en ce que** un deuxième ressort de rattrapage (381) intervient entre le deuxième bord latéral de la patte (550, 650) et le deuxième bord latéral de l'échancrure (440) en sorte que les deux ressorts de rattrapage (380, 381) sont montés de part et d'autre de la patte (550, 650).

23. Mécanisme selon la revendication 22, **caractérisé en ce que** les deux ressorts de rattrapage (380, 381) sont montés en opposition sous précontrainte.

24. Mécanisme selon la revendication 22, **caractérisé en ce que** les ressorts de rattrapage (380, 381) sont inclinés.

25. Mécanisme selon la revendication 20, **caractérisé en ce que** les premiers bords latéraux respectivement d'une patte (450, 550, 650) et d'une échancrure (440) présentent une pointe pour maintien des ressorts de rattrapage en forme de ressorts à boudin.

26. Mécanisme selon la revendication 22, **caractérisé en ce que** les deuxièmes bords latéraux respectivement d'une patte (550, 650) et d'une échancrure (440) présentent une pointe pour maintien des ressorts de rattrapage en forme de ressort à boudin.

27. Mécanisme selon la revendication 23, **caractérisé en ce que** la vis sans fin (36) est portée par un support (34) fixé au couvercle (2) et **en ce que** le ressort de rattrapage (380, 381) est monté à l'extérieur du support (34).

28. Mécanisme selon la revendication 1, **caractérisé en ce que** la pièce intermédiaire a une forme annulaire.

29. Mécanisme selon la revendication 1, **caractérisé en ce que** l'anneau (330) à rampes (32) est lié en rotation à la pièce intermédiaire (310) par au moins d'une seconde languette (200, 300) axialement élastique autorisant un déplacement axial de l'anneau (330).

30. Mécanisme selon la revendication 1, **caractérisé en ce que** la pièce intermédiaire (310) entoure l'anneau (330) à rampes (32).

31. Mécanisme selon la revendication 30, **caractérisé en ce que** la pièce intermédiaire (310) et l'anneau (300) à rampes (32) sont issus d'un même flanc métallique.

32. Mécanisme selon la revendication 30, **caractérisé en ce que** la pièce intermédiaire (310) présente à sa périphérie externe un rebord annulaire d'orientation axiale, éventuellement fractionné, pour contact intime de la pièce intermédiaire (310) avec la périphérie interne d'une jupe annulaire (23) globalement d'orientation axiale appartenant au couvercle (2).

33. Mécanisme selon la revendication 30, **caractérisé en ce que** la pièce intermédiaire (310) présente des oreilles (312) à sa périphérie interne et **en ce que** l'anneau présente des découpes (313) à sa périphérie externe pour formation d'un jeu autour des oreilles (312).

34. Mécanisme selon la revendication 33, **caractérisé en ce que** plusieurs secondes languettes (200) sont prévues et **en ce que** les oreilles (312) servent à la fixation des secondes languettes (200).

35. Mécanisme selon la revendication 34, **caractérisé en ce que** les secondes languettes (200) sont fixées à l'anneau (300) à rampes (32) entre deux secteurs annulaires que présentent les moyens d'appui (3).

36. Mécanisme selon la revendication 1, **caractérisé en ce que** l'anneau (330) à rampes (32) est dépourvu de rebord à ses périphéries externe et interne et présente centralement une forme pointue fragmenté pour formation des moyens d'appui.

37. Mécanisme selon la revendication 36, **caractérisé en ce que** plusieurs secondes languettes (200) sont prévues et **en ce que** la pièce intermédiaire (310) consiste en un anneau plat.

38. Mécanisme selon la revendication 28, **caractérisé en ce que** l'anneau (330) à rampes (32) présente à l'une de ses périphéries interne et externe un rebord annulaire (333) d'orientation axiale pour coopération avec le plateau de pression et centrage de l'anneau.

39. Mécanisme selon la revendication 38, **caractérisé en ce que** la pièce intermédiaire (310) présente un rebord (321) annulaire d'orientation axiale.

40. Mécanisme selon la revendication 29, **caractérisé en ce que** la pièce intermédiaire se réduit à un secteur denté relié par une seconde languette (300) à l'anneau (330) à rampes (32).

41. Mécanisme selon la revendication 28, **caractérisé en ce que** la ou les secondes languettes (200, 300) ont une forme courbe.

42. Mécanisme selon la revendication 28, **caractérisé en ce que** la ou les secondes languettes (200, 300) s'étendent tangentiellement.

43. Mécanisme selon la revendication 29, **caractérisé en ce que** la ou les secondes languettes élastiques (300) sont circonférentiellement élastiques.

44. Mécanisme selon la revendication 43, **caractérisé en ce que** la ou les secondes languettes (300) présente au moins un pli.

45. Mécanisme selon la revendication 44, **caractérisé en ce que** le pli est en forme d'ondulation.

46. Mécanisme selon la revendication 45, **caractérisé en ce que** la ou les secondes languettes (300) est pliée à la manière d'un accordéon avec au moins deux ondulations d'amplitude différente.

47. Mécanisme selon la revendication 29, **caractérisé en ce que** au moins un cavalier amovible (1000) intervient entre la pièce intermédiaire (310) et l'anneau (330) à rampes (32) pour limiter l'écartement axial entre la pièce intermédiaire (310) et l'anneau (330) à rampes (32) avant montage de ceux ci au sein du mécanisme d'embrayage.

48. Mécanisme selon la revendication 43, **caractérisé en ce que** la vis sans fin (36) est montée dans un support (34) fixé à la périphérie externe du couvercle (2) et **en ce que** les secondes languettes (300) constituent un ressort de rattrapage destiné à faire tourner l'anneau (330) à rampes (32).

49. Mécanisme selon la revendication 1, **caractérisé en ce que** la denture (31) est formée dans le fond d'un évidement réalisé à la périphérie externe de la pièce intermédiaire (310).

## Claims

1. A clutch mechanism, especially for a motor vehicle, comprising a cover plate (2) having a base (21) which is oriented transversely and has a central hole, a pressure plate (1) having a front friction face (11) for cooperation with a clutch friction wheel (101), which has at least one friction liner and which carries abutment means (3) on its back, means (10) for coupling the pressure plate (1) in rotation to the cover plate (2) while permitting axial movement of the pressure plate (1) with respect to the cover plate (2), clutch engaging means (41) bearing on the cover plate (2) for acting on the abutment means (3), declutching levers (42) mounted pivotally on the cover plate (2) for acting on the clutch engaging means, and a device for taking up wear in the liner or liners of the clutch friction wheel (101), wherein the wear take-up device comprises an actuator (410), fixed with respect to the clutch engaging means (41) and adapted to drive a worm (36) carried by the cover plate (2), the said worm (36) co-operating with a set of teeth (31) associated with an annular ring element (330), which has ramps (32) and which co-operates with counter-ramps (13) carried by the pressure plate (1),
**characterised in that** the set of teeth (31) is part of an intermediate member (310) which is coupled in rotation, to the annular ring element (330) having the ramps (32), through a connection (340, 350) which permits axial displacement, with respect to the intermediate member (310), of the annular ring element (330) having the ramps (32).

2. A mechanism according to Claim 1, **characterised in that** the intermediate member (310) is arranged inside the cover plate (2) in such a way as to be generally fixed axially to it.

3. A mechanism according to Claim 1, **characterised in that** at least one abutment member (10a, 10b, 10c, 10e, 10f) is carried by the cover plate (2) for contact with the intermediate member (310) and for maintaining the latter axially in the axial direction considered from the cover plate (2) to the pressure plate.

4. A mechanism according to Claim 3, **characterised in that** a plurality of abutment members (10a, 10b, 10c, 10e, 10f) are provided.

5. A mechanism according to Claim 4, **characterised in that** the abutment members (10a, 10b, 10c) are in the form of an annular sector at their inner periphery.

6. A mechanism according to Claim 4, **characterised in that** each of the abutment members (10a, 10b, 10c, 10e) is fixed to the cover plate by means of a fastening lug.

7. A mechanism according to Claim 6, **characterised in that** at least one of the fastening members (10e, 10f) is mounted in a housing (20) formed in a portion, having increased thickness, of the outer periphery of the cover plate (2).

8. A mechanism according to Claim 7, **characterised in that** the abutment member (10f) is a balance member.

9. A mechanism according to Claim 8, **characterised in that** the balancing member is in the form of an L-shaped element having a radially oriented portion directed radially inwards and constituting an abutment for the intermediate member (310), the said radial portion being extended by an axially oriented portion, to the free end of which the outwardly radially directed lug, that fastens it to the cover plate, is joined.

10. A mechanism according to Claim 8, **characterised in that** the abutment member (10f) is part of a support (34) carrying the worm (36), **in that** the support (34) is U-shaped with two lateral wing portions, and **in that** at least one of the wing portions has a lug (10f) directed radially inwards to constitute an axial abutment for the intermediate member.

11. A mechanism according to Claim 1, **characterised in that** the intermediate member (310) is gripped axially between two projecting elements (10a) fixed with respect to the cover plate (2).

12. A mechanism according to Claim 11, **characterised in that** the projecting elements (10a) are part of axially elastic first tongues (10), which couple the pressure plate (1) in rotation to the cover plate (2) with axial mobility.

13. A mechanism according to Claim 12, **characterised in that** the first tongues (10) are oriented tangentially, being secured at their first end to the cover plate (2), and **in that** the projecting elements (10a) are extensions of the first ends of the tongues (10).

14. A mechanism according to Claim 3, **characterised in that** the abutment member consists of an annular element having lugs for fastening it to the cover plate.

15. A mechanism according to Claim 1, **characterised in that** the annular ring element (330), with its ramps (32), is coupled in rotation in mating cooperation with the intermediate member (310).

16. A mechanism according to Claim 1, **characterised in that** one of the elements consisting of the annular ring element (330), with its ramps (32), and the intermediate member (310) has lugs (350) which penetrate into slots (340) in the other one of the elements consisting of the intermediate member (310) and ring element (330) with ramps (32).

17. A mechanism according to Claim 16, **characterised in that** the ring element (330) has axially oriented lugs (350) extending across slots (340) of the intermediate member.

18. A mechanism according to Claim 17, **characterised in that** the lugs (350) extend through the slots (340) with a circumferential fitting clearance.

19. A mechanism according to Claim 17, **characterised in that** the lugs (450, 550, 650) have a circumferential width which is smaller than that of the slots (440).

20. A mechanism according to Claim 19, **characterised in that** a take-up spring (380) bears at one of its ends on a first lateral edge (441) of a slot (440), and at its other end on a first lateral edge (551) of the lug (450, 550, 650) of the ring element (330) having ramps (32).

21. A mechanism according to Claim 20, **characterised in that** the take-up spring (380) urges the second lateral edge of the lug (450) into contact with the second lateral edge of the slot (440).

22. A mechanism according to Claim 20, **characterised in that** a second take-up spring (381) is interposed operatively between the second lateral edge of the lug (550, 650) and the second lateral edge of the slot (440), so that the two take-up springs (380, 381) are mounted on either side of the lug (550, 650).

23. A mechanism according to Claim 22, **characterised in that** the two take-up springs (380, 381) are mounted in opposition under pre-compression.

24. A mechanism according to Claim 22, **characterised in that** the take-up springs (380, 381) are inclined.

25. A mechanism according to Claim 20, **characterised in that** the first lateral edges, of a lug (450, 550, 650) and a slot (440) respectively, have a point for retaining the take-up springs, which are in the form of coil springs.

26. A mechanism according to Claim 22, **characterised in that** the second lateral edges, of a lug (550, 650) and a slot (440) respectively, have a point for retaining the take-up springs, which are in the form of coil springs.

27. A mechanism according to Claim 23, **characterised in that** the worm (36) is carried by a support (34) fixed to the cover plate (2), and **in that** the take-up spring (380, 381) is mounted on the outside of the support (34).

28. A mechanism according to Claim 1, **characterised in that** the intermediate member is annular in form.

29. A mechanism according to Claim 1, **characterised in that** the ring element (330) having ramps (32) is coupled in rotation to the intermediate member (310) by at least one axially elastic second tongue (200, 300) which permits axial displacement of the ring element (330).

30. A mechanism according to Claim 1, **characterised in that** the intermediate member (310) surrounds the ring element (330) having ramps (32).

31. A mechanism according to Claim 30, **characterised in that** the intermediate member (310) and the ring element (300) having ramps (32) project from a common metallic flank.

32. A mechanism according to Claim 30, **characterised in that** the intermediate member (310) has at its outer periphery an axially oriented annular flange, which may be of divided form, for intimate contact of the intermediate member (310) with the inner periphery of an annular skirt portion (23), which is generally axially oriented, of the cover plate (2).

33. A mechanism according to Claim 30, **characterised in that** the intermediate member (310) has ears (312) at its inner periphery, and **in that** the ring member has cut-outs (313) in its outer periphery to give a clearance around the ears (312).

34. A mechanism according to Claim 33, **characterised in that** a plurality of second tongues (200) are provided, and **in that** the ears (312) serve for fastening the second tongues (200).

35. A mechanism according to Claim 34, **characterised in that** the second tongues (200) are fixed to the ring element (300) having ramps (32), between two annular sectors of the abutment means (3).

36. A mechanism according to Claim 1, **characterised in that** the ring element (330) having ramps (32) is without any flange at its outer and inner peripheries, and has at the centre a divided and pointed form to constitute the abutment means.

37. A mechanism according to Claim 36, **characterised in that** a plurality of second tongues (200) are provided, and **in that** the intermediate member (310) consists of a flat annular ring.

38. A mechanism according to Claim 28, **characterised in that** the ring member (330) with ramps (32) has at one of its inner and outer peripheries an annular flange (333), oriented axially for cooperation with the pressure plate and for centring the ring element.

39. A mechanism according to Claim 38, **characterised in that** the intermediate member (310) has an axially oriented annular flange (321).

40. A mechanism according to Claim 29, **characterised in that** the intermediate member is reduced to one toothed sector joined by a second tongue (300) to the ring element (330) having ramps (32).

41. A mechanism according to Claim 28, **characterised in that** the or each second tongue (200, 300) is of curved form.

42. A mechanism according to Claim 28, **characterised in that** the or each second tongue (200, 300) extends tangentially.

43. A mechanism according to Claim 29, **characterised in that** the or each second elastic tongue (300) is elastic circumferentially.

44. A mechanism according to Claim 43, **characterised in that** the or each second tongue (300) has at least one bend.

45. A mechanism according to Claim 44, **characterised in that** the bend has a wave-like form.

46. A mechanism according to Claim 45, **characterised in that** the or each second tongue (300) is bent in accordion pleats, with at least two wave-like bends of different amplitudes.

47. A mechanism according to Claim 29, **characterised in that** at least one removable packing piece (1000) is interposed between the intermediate member (310) and the ring element (330) having ramps (32), for limiting the axial spacing between the intermediate member (310) and the ring element (330) with ramps (32) before these components are fitted into the clutch mechanism.

48. A mechanism according to Claim 43, **characterised in that** the worm (36) is mounted in a support (34) fixed to the outer periphery of the cover plate (2), and **in that** second tongues (300) constitute a take-up spring adapted to cause the ring element (330) with ramps (32) to turn.

49. A mechanism according to Claim 1, **characterised in that** the set of teeth (31) is formed in the base of an opening formed at the outer periphery of the intermediate member (310).

## Patentansprüche

1. Kupplungsmechanismus, insbesondere für Kraftfahrzeuge, umfassend einen Deckel (2) mit einem quer ausgerichteten mittig gelochten Boden (21), eine Druckplatte (1), die stimseitig eine Reibfläche (11) für das Zusammenwirken mit einer Kupplungsscheibe (101) mit wenigstens einem Reibbelag aufweist und rückseitig Auflagemittel (3) trägt, Mittel (10) zur drehfesten Verbindung der Druckplatte (1) mit dem Deckel (2), wobei sie gleichzeitig eine axiale Bewegung der Druckplatte (1) im Verhältnis zum Deckel (2) ermöglichen, Einrückmittel (41), die am Deckel (2) zur Anlage kommen, um auf die Auflagemittel (3) einzuwirken, Ausrückhebel (42), die schwenkbar am Deckel (2) gelagert sind, um auf die Einrückmittel einzuwirken, und eine Vorrichtung zur Nachstellung des Verschleißes des oder der Reibbeläge der Kupplungsscheibe (101), wobei die Verschleißnachstellvorrichtung ein Stellglied (410) umfasst, das fest mit den Einrückmitteln (41) verbunden und dazu bestimmt ist, eine am Deckel (2) angebrachte Schnecke (36) anzutreiben, wobei die besagte Schnecke (36) mit einer Zahnung (31) zusammenwirkt, die mit einem Ring (330) mit Rampen (32) verbunden ist, die mit an der Druckplatte (1) angebrachten Gegenrampen (13) zusammenwirken,
**dadurch gekennzeichnet, dass** die Zahnung (31) zu einem Zwischenteil (310) gehört, das drehfest mit dem Ring (330) mit Rampen (32) über eine Verbindung (340, 350) verbunden ist, die eine axiale Verschiebung des Rings (330) mit Rampen (32) im Verhältnis zum Zwischenteil (310) ermöglicht.

2. Mechanismus nach Anspruch 1, **dadurch gekennzeichnet, dass** das Zwischenteil (310) insgesamt axial fest im Deckel (2) angeordnet ist.

3. Mechanismus nach Anspruch 1, **dadurch gekennzeichnet, dass** wenigstens ein Anschlagteil (10a, 10b, 10c, 10^{e}, 10f) am Deckel (2) für den Kontakt mit dem Zwischenteil (310) und dessen axiale Halterung in der axialen Richtung vom Deckel (2) zur Druckplatte angebracht ist.

4. Mechanismus nach Anspruch 3, **dadurch gekennzeichnet, dass** mehrere Anschlagteile (10a, 10b, 10c, 10^{e}, 10f) vorgesehen sind.

5. Mechanismus nach Anspruch 4, **dadurch gekennzeichnet, dass** die Anschlagteile (10a, 10b, 10c) in Form eines ringförmigen Sektors an ihrem inneren Umfang ausgeführt sind.

6. Mechanismus nach Anspruch 4, **dadurch gekennzeichnet, dass** die Anschlagansätze (10a, 10b, 10c, 10^{e}) jeweils mit Hilfe wenigstens eines Befestigungsansatzes am Deckel befestigt sind.

7. Mechanismus nach Anspruch 6, **dadurch gekennzeichnet, dass** wenigstens eines der Befestigungsteile (10^{e}, 10f) in einer Aufnahme (20) angebracht ist, die als Erhebung am äußeren Umfang des Deckels (2) ausgebildet ist.

8. Mechanismus nach Anspruch 7, **dadurch gekennzeichnet, dass** das Anschlagteil (10f) ein Ausgleichteil ist.

9. Mechanismus nach Anspruch 8, **dadurch gekennzeichnet, dass** das Ausgleichteil winkelförmig mit einem radial nach innen verlaufenden radial ausgerichteten Abschnitt ausgeführt ist, der einen Anschlag für das Zwischenteil (310) bildet, wobei der besagte radiale Abschnitt durch einen axial ausgerichteten Abschnitt verlängert wird, an dessen freies Ende sich der radial nach außen gerichtete Befestigungsansatz für die Befestigung am Deckel anschließt.

10. Mechanismus nach Anspruch 8, **dadurch gekennzeichnet, dass** das Anschlagteil (10f) zu einem Träger (34) gehört, der die Schnecke (36) trägt, dass der Träger (34) eine U-Form mit zwei Seitenschenkeln hat und dass wenigstens einer der Schenkel einen radial nach innen gerichteten Ansatz (10f) aufweist, um einen axialen Anschlag für das Zwischenteil zu bilden.

11. Mechanismus nach Anspruch 1, **dadurch gekennzeichnet, dass** das Zwischenteil (310) axial zwischen zwei fest mit dem Deckel (2) verbundenen Ausstülpungen (10a) eingeklemmt ist.

12. Mechanismus nach Anspruch 11, **dadurch gekennzeichnet, dass** die Ausstülpungen (10a) zu ersten axial elastischen Zungen (10) gehören, welche die Druckplatte (1) drehfest und axial beweglich mit dem Deckel (2) verbinden.

13. Mechanismus nach Anspruch 12, **dadurch gekennzeichnet, dass** die ersten Zungen (10) tangential ausgerichtet und an ihrem ersten Ende am Deckel (2) befestigt sind und dass die Ausstülpungen (10a) das erste Ende der Zungen (10) verlängern.

14. Mechanismus nach Anspruch 3, **dadurch gekennzeichnet, dass** das Anschlagteil aus einem Ring besteht, der Ansätze für seine Befestigung am Deckel aufweist.

15. Mechanismus nach Anspruch 1, **dadurch gekennzeichnet, dass** der Ring (330) mit Rampen (32) durch formschlüssiges Zusammenwirken drehfest mit dem Zwischenteil (310) verbunden ist.

16. Mechanismus nach Anspruch 1, **dadurch gekennzeichnet, dass** eines der Elemente Ring (330) mit Rampen (32) - Zwischenteil (310) Ansätze (350) aufweist, die in Aussparungen (34) des anderen Elements Zwischenteil (310) - Ring (330) mit Rampen (32) eindringen.

17. Mechanismus nach Anspruch 16, **dadurch gekennzeichnet, dass** der Ring (330) axial ausgerichtete Ansätze (350) aufweist, die durch Aussparungen (340) des Zwischenteils hindurchgehen.

18. Mechanismus nach Anspruch 17, **dadurch gekennzeichnet, dass** die Ansätze (350) mit Umfangseinbauspiel durch die Aussparungen (340) hindurchgehen.

19. Mechanismus nach Anspruch 17, **dadurch gekennzeichnet, dass** die Ansätze (450, 550, 650) eine kleinere Umfangsbreite als die Aussparungen (440) aufweisen.

20. Mechanismus nach Anspruch 19, **dadurch gekennzeichnet, dass** eine Nachstellfeder (380) an einem ihrer Enden an einem ersten Seitenrand (441) einer Aussparung (340) und an ihrem anderen Ende an einem ersten Seitenrand (551) des Ansatzes (450, 550, 650) des Rings (330) mit Rampen (32) zur Anlage kommt.

21. Mechanismus nach Anspruch 20, **dadurch gekennzeichnet, dass** die Nachstellfeder (380) den zweiten Seitenrand des Ansatzes (450) in Kontakt mit dem zweiten Seitenrand (440) der Aussparung (440) beaufschlagt.

22. Mechanismus nach Anspruch 20, **dadurch gekennzeichnet, dass** eine zweite Nachstellfeder (381) zwischen dem zweiten Seitenrand des Ansatzes (550, 650) und dem zweiten Seitenrand der Aussparung (440) zum Einsatz kommt, so dass die zwei Nachstellfedern (380, 381) beiderseits des Ansatzes (550, 650) angebracht sind.

23. Mechanismus nach Anspruch 22, **dadurch gekennzeichnet, dass** die zwei Nachstellfedern (380, 381) entgegengesetzt vorgespannt angebracht sind.

24. Mechanismus nach Anspruch 22, **dadurch gekennzeichnet, dass** die Nachstellfedern (380, 381) geneigt sind.

25. Mechanismus nach Anspruch 20, **dadurch gekennzeichnet, dass** die ersten Seitenränder eines Ansatzes (450, 550, 650) bzw. einer Aussparung (440) eine Spitze zum Halten der Nachstellfedern in Form von Schraubenfedern aufweisen.

26. Mechanismus nach Anspruch 22, **dadurch gekennzeichnet, dass** die zweiten Seitenränder eines Ansatzes (550, 650) bzw. einer Aussparung (440) eine Spitze zum Halten der Nachstellfedem in Form von Schraubenfedern aufweisen.

27. Mechanismus nach Anspruch 23, **dadurch gekennzeichnet, dass** die Schnecke (36) an einem am Deckel (2) befestigten Träger (34) gelagert ist und dass die Nachstellfeder (380, 381) außerhalb des Trägers (34) angebracht ist.

28. Mechanismus nach Anspruch 1, **dadurch gekennzeichnet, dass** das Zwischenteil ringförmig ausgebildet ist.

29. Mechanismus nach Anspruch 1, **dadurch gekennzeichnet, dass** der Ring (330) mit Rampen (32) mit dem Zwischenelement (310) durch wenigstens eine zweite axial elastische Zunge (200, 300) drehfest verbunden ist, die eine axiale Bewegung des Rings (330) ermöglicht.

30. Mechanismus nach Anspruch 1, **dadurch gekennzeichnet, dass** das Zwischenteil (310) den Ring (330) mit Rampen (32) umgibt.

31. Mechanismus nach Anspruch 30, **dadurch gekennzeichnet, dass** das Zwischenteil (310) und der Ring (330) mit Rampen (32) aus einer gleichen Metallscheibe herausgearbeitet sind.

32. Mechanismus nach Anspruch 30, **dadurch gekennzeichnet, dass** das Zwischenteil (310) an seinem äußeren Umfang eine gegebenenfalls unterteilte, axial ausgerichtete ringförmige Randleiste für einen engen Kontakt des Zwischenteils (310) mit dem inneren Umgang einer insgesamt axial ausgerichteten ringförmigen Einfassung (23) aufweist, die zum Deckel (2) gehört.

33. Mechanismus nach Anspruch 30, **dadurch gekennzeichnet, dass** das Zwischenteil (310) an seinem inneren Umfang Lappen (312) aufweist und dass der Ring an seinem äußeren Umfang Einschnitte (313) zur Bildung eines Spiels um die Lappen (312) herum aufweist.

34. Mechanismus nach Anspruch 33, **dadurch gekennzeichnet, dass** mehrere zweite Zungen (200) vorgesehen sind und dass die Lappen (312) zur Befestigung der zweiten Zungen (200) dienen.

35. Mechanismus nach Anspruch 34, **dadurch gekennzeichnet, dass** die zweiten Zungen (200) am Ring (330) mit Rampen (32) zwischen zwei ringförmigen Sektoren befestigt sind, welche die Auflagemittel (3) aufweisen.

36. Mechanismus nach Anspruch 1, **dadurch gekennzeichnet, dass** der Ring (330) mit Rampen (32) ohne Randleiste an seinem äußeren und inneren Umfang ausgeführt ist und mittig eine unterteilte zugespitzte Form zur Bildung der Auflagemittel aufweist.

37. Mechanismus nach Anspruch 36, **dadurch gekennzeichnet, dass** mehrere zweite Zungen (200) vorgesehen sind und dass das Zwischenteil (310) aus einem flachen Ring besteht.

38. Mechanismus nach Anspruch 28, **dadurch gekennzeichnet, dass** der Ring (330) mit Rampen (32) an einem seiner inneren und äußeren Umfänge eine axial ausgerichtete ringförmige Randleiste (333) für das Zusammenwirken mit der Druckplatte und die Zentrierung des Rings aufweist.

39. Mechanismus nach Anspruch 38, **dadurch gekennzeichnet, dass** das Zwischenteil (310) eine axial ausgerichtete ringförmige Randleiste (321) aufweist.

40. Mechanismus nach Anspruch 29, **dadurch gekennzeichnet, dass** sich das Zwischenteil auf ein Zahnsegment beschränkt, das durch eine zweite Zunge (300) mit dem Ring (330) mit Rampen (32) verbunden ist.

41. Mechanismus nach Anspruch 28, **dadurch gekennzeichnet, dass** die zweite Zunge bzw. die zweiten Zungen (200, 300) eine gekrümmte Form aufweisen.

42. Mechanismus nach Anspruch 28, **dadurch gekennzeichnet, dass** sich die zweite Zunge bzw. die zweiten Zungen (200, 300) tangential erstrecken.

43. Mechanismus nach Anspruch 29, **dadurch gekennzeichnet, dass** die zweite(n) elastische(n) Zunge(n) (300) umfangsmäßig elastisch sind.

44. Mechanismus nach Anspruch 43, **dadurch gekennzeichnet, dass** die zweite Zunge bzw. die zweiten Zungen (300) wenigstens eine Biegung aufweisen.

45. Mechanismus nach Anspruch 44, **dadurch gekennzeichnet, dass** die Biegung in Form einer Wellung ausgeführt ist.

46. Mechanismus nach Anspruch 45, **dadurch gekennzeichnet, dass** die zweite Zunge bzw. die zweiten Zungen (300) akkordeonartig mit wenigstens zwei Wellungen mit unterschiedlicher Weite gefaltet ist.

47. Mechanismus nach Anspruch 29, **dadurch gekennzeichnet, dass** wenigstens eine abnehmbare Klammer (1000) zwischen dem Zwischenteil (310) und dem Ring (330) mit Rampen (32) zum Einsatz kommt, um die axiale Entfernung zwischen dem Zwischenteil (310) und dem Ring (330) mit Rampen (32) vor deren Einbau im Innem des Kupplungsmechanismus zu begrenzen.

48. Mechanismus nach Anspruch 43, **dadurch gekennzeichnet, dass** die Schnecke (36) in einem am äußeren Umfang des Deckels (2) befestigten Träger (34) gelagert ist und dass die zweiten Zungen (300) eine Nachstellfeder bilden, die dazu bestimmt ist, den Ring (330) mit Rampen (32) zu drehen.

49. Mechanismus nach Anspruch 1, **dadurch gekennzeichnet, dass** die Zahnung (31) im Boden einer Ausnehmung ausgebildet ist, die am äußeren Umfang des Zwischenteils (310) eingearbeitet ist.
